# EUROPÄISCHE PATENTSCHRIFT

(11) **EP 2 731 780 B1**
(45) Veröffentlichungstag und Bekanntmachung des Hinweises auf die Patenterteilung: **09.09.2015**
(21) Anmeldenummer: 12721296.7
(22) Anmeldetag: 16.05.2012
(51) Int. Cl.: B29C 49/42, B65C 9/00, B65G 47/84, B67C 7/00, B65G 47/86, B67C 3/24, B29C 49/58, B29C 49/06, B29C 35/08, B29C 49/36, B29C 49/12

(54) **EINSTERN ZU- UND ABFÜHRUNG VON BEHÄLTERN FÜR BEHANDLUNGSMASCHINEN**
ONE-STAR SYSTEM FOR FEEDING AND LEADING AWAY CONTAINERS FOR PROCESSING MACHINES
ACHEMINEMENT ET RETRAIT EN ÉTOILE UNIQUE DE CONTENANTS POUR DES MACHINES DE TRAITEMENT

(30) Priorität: 13.07.2011 DE 102011079078
(43) Veröffentlichungstag der Anmeldung: 21.05.2014
(73) Patentinhaber: KRONES Aktiengesellschaft, 93073 Neutraubling (DE)
(72) Erfinder: WINZINGER, Frank, 93073 Neutraubling (DE)
(74) Vertreter: Grünecker Patent- und Rechtsanwälte PartG mbB
(86) Internationale Anmeldenummer: PCT/EP2012/059109
(87) Internationale Veröffentlichungsnummer: WO 2013/007430

(56) Entgegenhaltungen:
- DE-A1- 3 133 341
- DE-A1- 10 325 693
- DE-A1-102005 008 685
- FR-A1- 2 700 293

## Beschreibung

Die Erfindung bezieht sich auf eine Behandlungsvorrichtung mit einem, insbesondere kontinuierlich angetriebenen, Behandlungsrad mit mindestens einer Behandlungsstation zur Behandlung von Behältern; mit nur einem Stern zum Zuführen und Entnehmen von Behältern in beziehungsweise aus der Behandlungsvorrichtung, der wenigstens zwei Greiferelemente zum Zuführen von zu behandelnden Behältern an die Behandlungsstation und zum Entnehmen der behandelten Behälter von der Behandlungsstation aufweist; wobei die Behandlungsstation eine Behandlungsposition innerhalb der Behandlungsstation aufweist; gemäß dem Oberbegriff des Patentanspruchs 1;

Im Stand der Technik werden verschiedenartige Vorrichtungen zum Behandeln von Behältern/Behältnissen diskutiert. Ein typisches Beispiel ist dabei die Blasformung von Behältern. Dabei wird ein Vorformling nach einer thermischen Behandlung / Vorkonditionierung in eine Blasstation in eine Blasform übergeben und dort durch Einwirkung eines Blasdrucks zu einem Behälter ausgeformt. Typischerweise werden hierzu eine Mehrzahl von radartigen, sternartigen Trägerrädern als Hilfsträger verwendet. Die Zuführräder liefern die thermisch vorkonditionierten Vorformlinge an. Die Vorformlinge werden von einer Mehrzahl von Behandlungsstationen vom Zuführrad entnommen. Nach der Blasformung werden die ausgeformten Behälter von einem Entnahmerad wieder entnommen und zur weiteren Verarbeitung weitergeleitet.

Bei derartigen Vorrichtungen benötigen jedoch die Zu- und Abführräder/-Sterne einen relativ großen Raumbedarf. Ferner ist der konstruktive Aufwand für Lagerung und Antrieb der Rotoren groß. Ferner tritt das Problem auf, dass die Zufuhrstelle und die Entnahmestelle relativ weit auseinander gezogen werden, so dass bedingt durch die Verwendung der beiden Räder ein relativ großer toter Winkel entsteht. In diesem Bereich kann praktisch keine Behandlung bzw. Produktion stattfinden. Entsprechend begrenzt dieser tote Winkel die Anzahl von Aufnahmemöglichkeiten und damit behandelnden Behandlungsstationen an einer derartigen Vorrichtung, so dass deren Anlagenleistung gemindert wird.

Die Anlagenleistung korreliert unter anderem mit dem Durchmesser des Behandlungsrades. Daher wird unter Umständen auf größere, und damit auch teurere Durchmesser ausgewichen, um eine für den Behandlungsprozess nötige Zeit zur Verfügung stellen zu können. Gleichzeitig kann bei einem größeren Durchmesser die Zahl der Behandlungsstationen möglicherweise erhöht werden. Allerdings ist eine derartige Lösung in der Regel sehr teuer. Deswegen wird nach Möglichkeiten gesucht, bei einem möglichst kleinen Durchmesser die Behandlungszeit zu vergrößern. Die DE 103 25 693 A1, die eine Vorrichtung gemäss dem Oberbegriff des Anspruchs 1 und ein Verfahren gemäss dem Oberbegriff des Anspruchs 12 offenbart, diskutiert eine Möglichkeit, nur einen Stern zum Zuführen und Abführen von Behältern zu verwenden, wobei auf den gemeinsamen Rotor unterschiedliche Greifer in Gruppen aufgeteilt sind, etwa acht Preformgreifer und acht Flaschengreifer, wobei die Greifer der ersten Gruppe andere Bahnkurven aufweisen als Greifer der zweiten Gruppe, wobei die Bahnkurven der jeweiligen Gruppe komplex sind.

Angesichts der anhand des Stands der Technik diskutierten Probleme, ist es Aufgabe der vorliegenden Erfindung, die Behandlungszeit bei möglichst kleinem Durchmesser des Behandlungsrades zu vergrößern und ferner eine robuste Möglichkeit zur Behandlung der Behälter bereitzustellen.

Diese Aufgabe wird gemäß Patentanspruch 1 gelöst mit einer Behandlungsvorrichtung mit einem, insbesondere kontinuierlich angetriebenen, Behandlungsrad mit mindestens einer Behandlungsstation zur Behandlung von Behältern, mit nur einem Stern zum Zuführen und Entnehmen von Behältern in beziehungsweise aus der Behandlungsvorrichtung, der wenigstens zwei Greiferelemente zum Zuführen von zu behandelnden Behältern an die Behandlungsstation und zum Entnehmen der behandelten Behälter von der Behandlungsstation aufweist; wobei die Behandlungsstation eine Behandlungsposition innerhalb der Behandlungsstation aufweist.

Ferner wird diese Aufgabe ebenfalls mit einem entsprechenden Verfahren zum Behandeln von Behältern mit einer Behandlungsvorrichtung mit einem, insbesondere kontinuierlich angetriebenen, Behandlungsrad mit mindestens einer Behandlungsstation zur Behandlung von Behältern; mit nur einem Stern zum Zuführen und Entnehmen von Behältern in beziehungsweise aus der Behandlungsvorrichtung, wobei der Stern wenigstens zwei Greiferelemente zum Zuführen von zu behandelnden Behältern an die Behandlungsstation und zum Entnehmen der behandelten Behälter von der Behandlungsstation aufweist; wobei die Behandlungsstation eine Behandlungsposition innerhalb der Behandlungsstation aufweist gemäß Patentanspruch 19 gelöst.

Die Begriffe Behälter und Behältnis werden im Folgenden synonym verwendet. Als Behälter oder Behältnis seien in diesem Zusammenhang Behälter, beispielsweise Flaschen, Gebinde, Vorformlinge und fertig geblasene Flaschen, aber auch Glasflaschen oder andere Arten von Behältnissen, verstanden, die zur Aufnahme von Flüssigkeiten, insbesondere Getränken dienen können, in denen Flüssigkeiten verpackt, versiegelt und transportiert werden können.

Der nur eine Stern ist ein Stern zum Zuführen und Entnehmen von Behältern und wird auch als Zuführ- und Entnahmestern bezeichnet.

Die Erfindung stellt eine Behandlungsvorrichtung bereit mit einem, insbesondere kontinuierlich angetriebenen, Behandlungsrad mit mindestens einer Behandlungsstation zur Behandlung von Behältern; mit nur einem Stern zum Zuführen und Entnehmen von Behältern in beziehungsweise aus der Behandlungsvorrichtung, der wenigstens zwei Greiferelemente zum Zuführen von zu behandelnden Behältern an die Behandlungsstation und zum Entnehmen der behandelten Behälter von der Behandlungsstation aufweist; wobei die Behandlungsstation eine Behandlungsposition innerhalb der Behandlungsstation aufweist; wobei die Behandlungsstation mindestens ein Behälter behandelndes Behandlungselement aufweist, das so ausgebildet ist, dass es wenigstens teilweise die zugeführten, zu behandelnden Behälter und/oder die zu entnehmenden, behandelten Behältern aus der Behandlungsposition heraus und/oder in die Behandlungsposition hinein, insbesondere vertikal oder horizontal, bewegen kann.

Durch die vertikale Bewegung der Behälter kann insbesondere im Bereich der Übergabe bzw. Übernahme Platz geschaffen, um ein weiteres zu behandelndes oder behandeltes Behältnis derselben Behandlungsstation zuzuführen bzw. zu entnehmen.

In der oben beschriebenen Behandlungsvorrichtung ist es also das Behandlungselement in der Behandlungsstation, das die zu behandelnden und/oder behandelten Behälter/Behältnisse annehmen und insbesondere hinsichtlich der Höhe nach oben oder nach unten bewegen kann bzw. den Behälter anheben oder absenken kann. Dabei kann das Zuführen und Entnehmen im Wesentlichen parallel, also im Wesentlichen zeitgleich oder zeitlich kurz versetzt zueinander erfolgen. Dabei können die zu behandelnden Behälter und die behandelten Behälter von den mindestens zwei Greiferelementen im Wesentlichen transportiert werden, also auf die Behandlungsstation zu respektive in das Behandlungselement der Behandlungsstation hinein und aus dem Behandlungselement der Behandlungsstation heraus, also von der Behandlungsstation weg. Typischerweise können auch innerhalb bzw. im Bereich des Behandlungselementes Transportwege auftreten. Diese können sowohl horizontal, also im Wesentlichen parallel zur Ebene des Behandlungsrades sein, als auch vertikal, also im Wesentlichen senkrecht zur Ebene des Behandlungsrades. Hierbei kann das Behandlungselement die Behälter bewegen.

In der Behandlungsvorrichtung wie oben beschrieben, kann das Behandlungselement einen Antrieb umfassen, wobei für die Bewegung der Behälter der Antrieb des Behandlungselements genutzt wird.

Dadurch, dass die Bewegung der Behälter in vertikaler Richtung vom Behandlungselement selbst durchgeführt wird, kann man also hierfür die bereits an dem Behandlungselement zur Behandlung der Behälter vorhandenen Funktionen und die Antriebe des Behandlungselements nutzen, um mit diesen ein Greifen und Bewegen der Behälter durchzuführen. Bei den Funktionen kann es sich beispielsweise um eine Druckluftbeaufschlagung oder eine Vakuumbeaufschlagung handeln.

In der Behandlungsvorrichtung, wie oben beschrieben, kann das Behandlungselement mit einer Pneumatik eine pneumatische Behandlung der Behälter durchführen; wobei durch die Pneumatik ein Anheften der Behälter an das Behandlungselement gesteuert wird.

Im Normalbetrieb der Behandlungsvorrichtung wie oben beschrieben kann also eine pneumatische Behandlung der Behälter durchgeführt werden. Dabei kann es sich um den Einsatz von Druckluft zu verschiedenen Formen der Behandlung handeln, beispielsweise zum Streckblasen, Etikettieren, Füllen, oder Ausblasen, also Reinigen der Behälter. Zusätzlich kann beispielsweise die eingesetzte Pneumatik auch für ein Festheften oder Anheften der zu behandelnden oder der behandelten Behälter an das Behandlungselement sorgen.

Das heißt, es werden insbesondere keine zusätzlichen, möglicherweise komplizierten Vorrichtungen auf dem nur einem Stern notwendig, die die Bewegung der Behälter insbesondere in der Behandlungsstation betreffen. Zusätzlich kann die Bewegung der zu behandelnden Behälter und der behandelten Behälter innerhalb des Behandlungselements der Behandlungsstation oder der Behandlungsstation auch horizontale Anteile aufweisen. Diese Bewegungsanteile können zumindest teilweise auch von dem Behandlungselement ausgeführt werden.

In der Behandlungsvorrichtung, wie oben beschrieben, können die wenigstens zwei Greiferelemente des Sterns im Wesentlichen in einer Ebene angeordnet sein, die im Wesentlichen parallel zur Ebene der Behandlungsvorrichtung ist, wobei ein erstes Greiferelement der wenigstens zwei Greiferelemente nur aus der Behandlungsstation zu entnehmenden Behältern zugeordnet ist und ein zweites der wenigstens zwei Greiferelemente nur in die Behandlungsstation einzuführenden Behältern zugeordnet ist.

Zumindest zeitweise können also einzelne Greiferelemente alleinig den zu entnehmenden, behandelten Behältern zugeordnet sein. Im Wesentlichen parallel dazu können zumindest zeitweise einzelne Greiferelemente alleinig den einzuführenden, zu behandelnden Behältern zugeordnet sein. Die Greiferelemente für die zu entnehmenden, behandelten Behälter und die Greiferelemente für die einzuführenden, zu behandelnden Behälter können im Wesentlichen in einer Ebene angeordnet sein. Das heißt, die zu entnehmenden Behälter und die einzuführenden Behälter werden beispielsweise im Wesentlichen auf gleicher Höhe entnommen respektive eingeführt. Die Greiferelemente sind beispielsweise lediglich horizontal gegeneinander versetzt. Die im Wesentlichen eine Ebene ist beispielsweise eine Ebene, die im Wesentlichen parallel zur Ebene des Behandlungsrades liegt.

In der Behandlungsvorrichtung, wie oben beschrieben, können die wenigstens zwei Greiferelemente des Sterns in zwei höhenversetzten Ebenen angeordnet sein, die jede im Wesentlichen parallel zur Ebene der Behandlungsvorrichtung ist, so dass die zu behandelnden Behälter im Wesentlichen in einer der beiden höhenversetzten Ebenen einführbar sind und die behandelten Behälter im Wesentlichen in der anderen der beiden höhenversetzten Ebenen ausführbar sind.

Somit können die behandelten Behälter beispielsweise in einer anderen Höhe entnommen werden, als in der Höhe, in der die zu behandelnden Behälter zugeführt werden. Dabei können die zu behandelnden Behälter und die behandelten Behälter im Wesentlichen übereinander eingeführt respektive entnommen werden. Es ist aber ebenso möglich, dass die zu behandelnden und die behandelten Behälter zusätzlich zur unterschiedlichen Höhe auch in horizontaler Richtung an verschiedenen Stellen zugeführt respektive entnommen werden. Nach erfolgter Behandlung kann das Behandlungselement den behandelten Behälter aus der Behandlungsposition bewegen, so dass ein neuer, zu behandelnder Behälter eingegeben werden kann, während der behandelte Behälter das Behandlungselement und schließlich die Behandlungsstation verlässt.

In der Behandlungsvorrichtung, wie oben beschrieben, können ferner die Greiferelemente eine Schwenkbewegung und/oder eine teleskopartige Linearbewegung in einer Ebene ausführen können, die im Wesentlichen parallel zur Ebene der Behandlungsvorrichtung ist.

Die Greiferelemente, die auf dem Stern angeordnet sind, können dort beispielsweise jeweils einzeln schwenkbar sein. Dazu kann etwa ein Greiferelement ein Schwenkgelenk aufweisen, was eine Schwenkbewegung des Greiferelements im Wesentlichen parallel zur Ebene der Behandlungsvorrichtung, d. h. des Behandlungsrades, ausführen kann. Da typischerweise die Ebene des Sterns parallel zur Ebene der Behandlungsvorrichtung liegt, liegt die Schwenkbewegung der Greiferelemente ebenfalls in einer Ebene parallel zur Ebene des Zuführ- und Entnahmesterns. Ein Greiferelement kann beispielsweise aus einem an einem Schwenkgelenk befindlichen Greiferkörper und Greiferarmen oder Greiferfingern, bestehen. Diese können beispielsweise klammerartig einen Behälter klammern, also festhalten. Eine teleskopartige Linearbewegung ist insbesondere geeignet, einen Behälter in einer Ebene im Wesentlichen parallel zur Ebene der Behandlungsvorrichtung, also beispielsweise horizontal, auf/in die Behandlungsvorrichtung, respektive das Behandlungselement der Behandlungsstation der Behandlungsvorrichtung hinein zu führen und ebenso einen behandelten Behälter dort wieder zu entnehmen, insbesondere ist eine Überlagerung einer Schwenkbewegung und der teleskopartigen Linearbewegung dazu geeignet, ein Begleiten des Greifers entlang des Transportpfads der Behandlungsstation zu ermöglichen. Es ist ebenso möglich, dass ein Greiferelement mehrere Greiferarme als Teilgreifer besitzt, die gabelartig von einem hinteren Greiferelement, das typischerweise an dem oben bezeichneten Schwenkgelenk angesetzt ist, verzweigen.

In der Behandlungsvorrichtung, wie oben beschrieben, können die Greiferelemente zusätzlich höhenverstellbar sein. Eine Höhenverstellbarkeit kann entweder durch eine separate Möglichkeit zur Höhenverstellbarkeit oder durch ein Kugelgelenk vorhanden sein. Es ermöglicht, die Greifer, in der Höhe zu justieren, was insbesondere im Hinblick auf das Einjustieren von Anlagen vorteilhaft sein kann. Ebenso können dadurch Aspekte der Größe der zu behandelnden Behältnisse berücksichtigt werden, was insbesondere dann wichtig ist, wenn in einer Maschine mehr als eine Art von Behältern behandelt werden soll. Insbesondere ist auch der Hub der Greifer einstellbar.

In der Behandlungsvorrichtung, wie oben beschrieben, können die Bewegungen der Greiferelemente mit einem oder mehreren Servomotoren oder magnetisch wirkenden Linearmotoren gesteuert werden.

Insbesondere kann jeder einzelne Greifer oder jeder Teilgreifer eines Greiferstücks mit mehreren Greiferelementen mit einem oder mehreren Servomotoren oder magnetisch wirkenden Linearmotoren gesteuert werden. Die Steuerung durch diese ein oder mehreren Motoren kann beispielsweise mittels einer Steuereinheit geeignet kontrolliert werden, wodurch eine Steuerung der Anlage mit Hilfe eines externen Steuersystems ermöglicht wird.

In der Behandlungsvorrichtung, wie oben beschrieben, kann das Behandlungselement eine Vorrichtung zur Blasformung von Behältern umfassen, sowie eine Blasform, wobei beispielsweise die zugeführten, zu behandelnden Behälter Vorformlinge sind.

In einer derartigen Behandlungsvorrichtung werden beispielsweise mit Hilfe einer Blasform die zugeführten Vorformlinge zu Behältern, beispielsweise PET-Flaschen, geformt. Typischerweise ist jede der Behandlungsstationen mit einer Blasform versehen, gegen deren Innenoberfläche ein in die Blasform eingebrachter Vorformling typischerweise mit Druckluft expandiert wird.

In der Behandlungsvorrichtung, wie oben beschrieben, kann das Behandlungselement der Blasstation eine Blasdüse umfassen, die eine Dichtung umfassen kann, die den Behälter zumindest an seinem oberen Ende radial umschließt, wobei die Blasdüse ausgebildet sein kann, die Behälter durch Druckvariation an das Behandlungselement anzuheften, die angehefteten Behälter zu bewegen und/oder abzusetzen.

Neben der Blasform kann also das Behandlungselement der Behandlungsstation der Vorrichtung zur Blasformung auch eine Blasdüse umfassen, die den Vorformling gegenüber der Umgebung abdichtet und aus der Druckmedium zur Expansion des Vorformlings in diesen hineinströmt. Hierzu umfasst die Blasdüse eine Dichtung. Dabei kann die Mündung des Vorformlings radial von innen, radial von außen, von oben - beispielsweise gegen dessen Oberkante oder gegen dessen Tragring - oder an jeder anderen beliebigen Position mittels einer Dichtung abgedichtet werden. Die Mündung ist hierbei meist nach oben ausgerichtet, kann aber auch nach unten ausgerichtet sein.

Die Blasdüse kann dazu ausgebildet sein, die Behälter durch Druckvariation an die Blasstation anzuheften, die angehefteten Behälter zu bewegen und/oder abzusetzen. Durch Unterdruck, insbesondere Vakuum, können die Behälter an der Blasdüse anheften, und zwar insbesondere derart, dass es möglich sein kann, die Behälter mit der Blasdüse zu bewegen. Das heißt, die an der Blasdüse angehefteten Behälter folgen einer Bewegung, beispielsweise einer vertikalen Bewegung, der Blasdüse. Die Blasdüse ist damit also beispielsweise geeignet, die Behälter anzusaugen oder festzusaugen, anzuheben oder, durch Wiederherstellen von im Wesentlichen dem Umgebungsdruck, die Behälter wieder abzusetzen. Es kann dazu ebenso möglich sein, einen geringen Überdruck aufzubauen, um die Behälter von der Blasdüse ablösen zu können.

In der Behandlungsvorrichtung, wie oben beschrieben, kann das Behandlungselement der Behandlungsstation eine Blasdüse und eine Reckstange umfassen, wobei die Reckstange ausgebildet sein kann, die Behälter an die Reckstange durch Druckvariation anzuheften, die angehefteten Behälter zu bewegen und/oder abzusetzen.

Die Reckstange, die typischerweise zum Recken der eingeführten, vorher bereits thermisch konditionierten Vorformlinge dient, kann zusätzlich dazu dienen, die Behälter mit den Bewegungen der Reckstange mitzuführen. Hierdurch entsteht als zusätzlicher Vorteil, dass die Reckstange relativ große Bewegung hinsichtlich des Reckens sowieso typischerweise ausführen soll, so dass die Bewegung der an die Reckstange angehefteten Behälter praktisch keine zusätzlichen Wege der Reckstange erfordert. Das heißt, wiederum, insbesondere im Hinblick auf vertikale/axiale Bewegung, kann die Reckstange in Verbindung mit Druckvariationen die Behälter vorteilhaft bewegen. Allgemein, aber auch insbesondere hierfür, können die Bewegungen der Blasdüse und der der Reckstange miteinander gekoppelt sein. Insbesondere wird für die Bewegung des Behälters dann der Antrieb der Reckstange genutzt.

Zusätzlich kann das Behandlungselement der Behandlungsstation in der Behandlungsvorrichtung, wie oben beschrieben, eine Klammervorrichtung zum Fassen der Behälter umfassen. An der Blasdüse oder an der Reckstange, wie oben beschrieben, können also ein zusätzliches Klammerelement oder Greifelement am unteren Ende angebracht sein, um eine zusätzliche Klammerwirkung zu erzeugen.

An der Blasvorrichtung, wie oben beschrieben, können ferner an der Blasdüse oder in einem in der unmittelbaren Nähe der Blasdüse angeordnetem Ventilblock bewegliche Ventile zum Steuern des Festhaltens der Behälter, insbesondere durch Druckvariation, vorgesehen sein.

Über diese Ventile kann beispielsweise Druckluft gegen eine an der Blasdüse angeordnete, flexible Dichtung geleitet werden, was in Folge die Dichtung gegen die Oberfläche des Behälters presst, so dass dieser reib- und/oder formschlüssig mit der Blasdüse verbunden ist. Dadurch kann der Antrieb der Blasdüse den Behälter bewegen. Insbesondere ist die Dichtung nicht nur zum Bewegen des Behälters geeignet, sondern auch um diesen beim Blasprozess gegenüber der Umgebung abzudichten. Insbesondere wird dann sowohl die Dichtung als auch der Behälterinnenraum mit derselben Druckluftquelle verbunden. Dieses Prinzip ist auch bei anderen Behandlungsvorrichtungen einsetzbar, bei denen der Behälter abgedichtet wird, zum Beispiel in einer Füllvorrichtung.

In der Blasvorrichtung, wie oben beschrieben, kann die Blasform, die zur Blasformung der Behälter/der Vorformlinge verwendet wird, eine wenigstens dreiteilige Blasform mit einem Boden sein, der relativ zur Blasstation bzw. zum Blasrad stationär ausgebildet sein kann.

Der Blasformboden ist üblicherweise in einer vertikalen Richtung, also parallel zur Blasdüse, separat angetrieben, während die Blasformseitenteile beim Entformungsvorgang des fertig geblasenen Behälters seitlich vom Behälter wegbewegt werden. Die vertikale Bewegung des Bodens ist üblicherweise nötig, um den Behälter in der Horizontalen aus der Blasform entnehmen zu können, weil im Boden bei herkömmlichen Flaschen Hinterschnitte vorhanden sind. Durch eine Bewegung des Behälters vor der Entnahme mittels des Sterns zum Zuführen und Entnehmen von Behältern weg vom Blasformboden über die Blasdüse, kann der Antrieb des Bodens auch eingespart werden, da der Hinterschnitt sozusagen von der Blasdüse überwunden wird.

In der Behandlungsvorrichtung, wie oben beschrieben, kann die Behandlungsstation eine Füllstation zum Befüllen von Behältern umfassen.

Die Füllstation kann dabei typischerweise eine rundlaufende Füllstation zum Befüllen von Behältern umfassen.

In der Behandlungsvorrichtung, wie oben beschrieben, kann das Behandlungselement ein Füllventil umfassen, das eine Dichtung umfasst, die den Behälter zumindest an seinem oberen Ende radial umschließt, wobei der Behälter mittels Druckvariation im Füllventil an das Füllventil angeheftet werden kann, wobei der angeheftete Behälter mittels des Füllventils bewegt und/oder abgesetzt werden kann.

Dabei kann ein Behälter/ein Behältnis mit der Füllstation, dem Füller, bewegt werden. Das Füllventil der Füllstation kann beispielsweise durch Druckvariationen eine Aufnahme bzw. ein Greifen der Behälter veranlassen. Das Behältnis wird beispielsweise nach der Aufnahme durch das Füllventil mittels dessen Antriebs bewegt.

Bei Vakuumfüllern kann das Ansaugen mittels eines Unterdrucks, bei gleichzeitiger Nutzung eines Vakuumkanals der Füllstation geschehen. Ferner lassen sich bei Vorspannventilen die Druckvariation ähnlich den Druckvariationen einer Blasstation zum Bewegen der Behälter verwenden.

In der Füllstation, wie oben beschrieben, kann das Behandlungselement zusätzlich eine Vakuumpumpe umfassen, wobei der Behälter zusätzlich mittels Druckvariation in der Vakuumpumpe angeheftet, bewegt und/oder abgesetzt werden kann.

Zusätzlich kann in der Füllstation, wie oben beschrieben, das Behandlungselement eine Klammervorrichtung zum Fassen der Behälter umfassen.

In der Behandlungsvorrichtung, wie oben beschrieben, kann die Behandlungsstation eine Etikettierstation umfassen, wobei das Behandlungselement eine Zentrierglocke umfasst, die an eine Vakuumpumpe angeschlossen ist und/oder eine Klammervorrichtung zum Fassen der Behälter umfasst, so dass die Behälter angeheftet, bewegt und/oder abgesetzt werden können.

Ähnlich wie bei der Füllstation und der Blasstation kann hierbei bei Druckvariation ein Anheften eines Behälters an die Behandlungsstation erreicht werden und dadurch eine vertikale oder horizontale Bewegung des Behälters durchgeführt werden. Bei einer Etikettiermaschine können zusätzlich oder alternativ die Zentrierköpfe mit zusätzlichen Greiferelementen versehen sein, die Behälter vor einer Zuführung eines nachfolgenden Behältnisses anheben können. Ebenso ist es möglich, nicht den Zentrierkopf, sondern den Teller, auf dem der Behälter üblicherweise während des Etikettierens steht, abzusenken oder anzuheben, um so Platz für einen neuen zu etikettierenden Behälter zu schaffen. Dies kann insbesondere bei der Etikettierung mit vorgefertigten, schlauchförmigen Etiketten von Vorteil sein, denn hier sind zum Überstülpen des Etiketts über den Behälter oftmals schon Antriebe für den Behälter in der vertikalen Richtung vorhanden. Bei den Greiferelementen des Zuführ- und Entnahmesterns handelt es sich hier üblicherweise um einen Taschenstern, welcher die Behälter in umlaufender Weise in die Maschine einführt bzw. der Maschine entnimmt. Die Behälter sind dabei bodengestützt. Alternativ kann aber auch ein wie oben beschriebener Zuführ- und Entnahmestern vorgesehen sein, welcher die Behälter insbesondere mit im Bereich der Behältermündung kontaktierenden Klammern transportiert. Dies ist insbesondere bei sogenannten Blockanlagen von Vorteil, bei denen die Etikettiermaschine nach der Blasmaschine und vor der Füllmaschine angeordnet ist.

Die Erfindung stellt ebenso ein Verfahren zum Behandeln von Behältern mit einer Behandlungsvorrichtung mit einem, insbesondere kontinuierlich angetriebenen, Behandlungsrad mit mindestens einer Behandlungsstation zur Behandlung von Behältern; mit nur einem Stern zum Zuführen und Entnehmen von Behältern in beziehungsweise aus der Behandlungsvorrichtung, wobei der Stern wenigstens zwei Greiferelemente zum Zuführen von zu behandelnden Behältern an die Behandlungsstation und zum Entnehmen der behandelten Behälter von der Behandlungsstation aufweist; wobei die Behandlungsstation eine Behandlungsposition innerhalb der Behandlungsstation aufweist; bereit, wobei das Verfahren das Behandeln eines Behälters in einem Behandlungselement der Behandlungsstation umfasst, sowie das Entnehmen des behandelten Behälters aus und Zuführen eines zu behandelnden Behälters in das Behandlungselement von dem Stern; und das Bewegen des zugeführten Behälters in die Behandlungsposition und/oder des zu entnehmenden Behälters aus der Behandlungsposition mit dem Behandlungselement, insbesondere in einer horizontalen oder vertikalen Richtung.

In dem Verfahren, wie oben beschrieben, kann das Behandlungselement eine Vorrichtung zur Blasformung von Behältern umfassen, sowie eine Blasform, wobei das Verfahren die folgenden Schritte umfassen kann: Greifen des zu behandelnden Behälters, beispielsweise eines Vorformlings, mit einem Greiferelement; danach Blasen eines Behälters zu einem behandelten Behälter, beispielsweise zu einer Flasche, aus einem bereits eingeführten, zu behandelnden Behälter; dann Öffnen der Blasform und Anheben des geblasenen Behälters aus der geöffneten Blasform mittels des Behandlungselements; dann Greifen des geblasenen Behälters mit einem anderen, zweiten Greiferelement und Eingeben des zu behandelnden Behälters, beispielsweise dem Vorformling, mit einem anderen, ersten Greiferelement in die geöffnete Blasform; danach Schließen der Blasform um den eingegebenen, zu behandelnden Behälter, und Loslassen des geblasenen Behälters aus dem Behandlungselement; danach Abnehmen des eingegebenen, zu behandelnden Behälters aus dem ersten Greiferelement und Entnehmen des geblasenen Behälters mit dem zweiten Greiferelement.

Das Verfahren lässt sich also beispielsweise in einer Blasmaschine umsetzen. In dem Verfahren können hier also geblasene Behälter, typischerweise fertig geblasene Behälter, und neu zu behandelnde, also zu blasende Behälter, beispielsweise Vorformlinge, im Wesentlichen parallel, d.h. in etwa zur gleichen Zeit, in die Blasstation eingeführt und von ihr entnommen werden. Typischerweise geschieht dabei das Zuführen und Entnehmen auf unterschiedlichen Ebenen, wie bereits oben beschrieben. Alternativ kann dies auch seitlich zueinander versetzt geschehen.

In dem Verfahren, wie oben beschrieben kann die Behandlungsstation eine Füllstation zum Befüllen von Behältern umfassen, wobei das Verfahren ferner die folgenden Schritte umfassen kann: Greifen eines zu behandelnden Behälters, beispielsweise einer Flasche, mit einem ersten Greiferelement; Füllen eines bereits eingeführten, zu behandelnden Behälters, beispielsweise einer Flasche, mit einer Flüssigkeit, beispielsweise einem Getränk; danach Anheben des gefüllten Behälters mittels des Behandlungselements; Greifen des gefüllten Behälters mit einem anderen, zweiten Greiferelement und Eingeben des zu behandelnden Behälters; dann Loslassen des gefüllten Behälters aus dem Behandlungselement; danach Abnehmen des zu behandelnden eingegebenen Behälters aus dem ersten Greiferelement und Entnehmen des gefüllten Behälters mit dem zweiten Greiferelement.

In dem Verfahren, wie oben beschrieben, kann die Behandlungsstation eine Etikettierstation umfassen, wobei das Behandlungselement eine Zentrierglocke umfassen kann, die an eine Vakuumpumpe angeschlossen ist und/oder eine Klammervorrichtung zum Fassen der Behälter und/oder ein Bodenteller, auf welchem die Behälter transportiert werden, umfasst, wobei das Verfahren die folgenden Schritte umfassen kann: Greifen eines zu behandelnden Behälters, beispielsweise einer Flasche, mit einem ersten Greiferelement; Etikettieren eines bereits eingeführten, zu behandelnden Behälters, beispielsweise einer Flasche; Anheben des etikettierten Behälters mittels des Behandlungselements; dann Greifen des etikettierten Behälters mit einem anderen, zweiten Greiferelement und Eingeben des zu behandelnden Behälters; Loslassen des etikettierten Behälters aus dem Behandlungselement; dann Abnehmen des zu behandelnden, eingegebenen Behälters aus dem ersten Greiferelement und Entnehmen des etikettierten Behälters mit dem zweiten Greiferelement.

Allgemein kann unter einem - wie in den letzten beiden Absätzen beschrieben - Greifen, insbesondere bei der Füllstation und der Etikettierstation, auch ein Transport verstanden werden, bei dem die Behälter durch seitlichen Kontakt von einem Taschenstern (als Zuführ- und Entnahmestern) entlang einer Führung befördert werden. Insbesondere erfolgt dieser Transport bodengestützt, also im sogenannten Basehandling.

Es gilt also, dass in einer Behandlungsvorrichtung, wie oben beschrieben, die zu behandelnden Behälter/Behältnisse mit den Behandlungselementen der Behandlungsstationen angehoben, abgesetzt oder bewegt werden können. Die Bewegung der Behälter durch die Behandlungselemente kann durch deren bereits vorhandene Antriebe durchgeführt werden. Damit sind diese Bewegungen weitestgehend entkoppelt von den Bewegungen des Zuführ- und Entnahmesterns und den darauf vorgesehenen Greiferelementen.

Allgemein können die Behandlungselemente einer Behandlungsstation auch Greiferelemente umfassen, wenn ein durchgängiges Neckhandling, also ein Transport der Behälter allein durch ein Halten am Mündungsbereich, innerhalb der Behandlungsvorrichtung gewünscht ist.

Das grundsätzliche Prinzip der oben beschriebenen Einsternzuführung ist auch auf andere rundlaufende Maschinen einer Abfüllanlage übertragbar. Hier zu nennen sind u.a. Verschließer, Rinser, Sterilisatoren für Flaschen oder Vorformlinge, Plasmabeschichtungsmaschinen, Öfen zum Konditionieren von Vorformlingen und dergleichen.

Bei Öfen zum thermischen Konditionieren von Vorformlingen ist dies insbesondere möglich, wenn es sich um Öfen mit einzelnen Vorformlingen zugeordneten Heizkavitäten handelt. Bei den Kavitäten kann es sich um Heiztaschen handeln, in deren Inneren Heizstrahler angeordnet sind, welche Vorformlinge insbesondere mit Infrarotstrahlung erwärmen. Laserenergie zur Erwärmung wäre hier auch denkbar. Bei den Heizkavitäten kann es sich auch um Resonatoren handeln, innerhalb derer Vorformlinge mittels Mikrowellenstrahlung erwärmt werden. Beim Einsatz von derartigen Kavitäten können die an einem Heizdorn aufgesteckten Vorformlinge - wie auch bei den anderen Maschinen beschrieben - vor der Abgabe vertikal nach oben aus der Kavität heraus gezogen werden. Von dem Zuführ- und Entnahmestern wird im Wesentlichen gleichzeitig ein neuer zu erwärmender Vorformling auf der Oberkante der Kavität mit dessen Transportring abgelegt bzw. von einer Klammer an der Kavität übernommen. Der Heizdorn, von dem in der Zwischenzeit der behandelte Vorformling abgezogen wurde, nimmt anschließend den neuen, unbehandelten Vorformling wieder auf. Das Ablegen oder Anheften des Vorformlings an der Kavität kann auch durch eine Öffnungs- und Schließbewegung der Heizkammer selbst - ähnlich wie bei einer Blasform - vorgenommen werden. Wie auch bei den anderen Maschinen kann der sowieso vorhandene Antrieb des Heizdorns zur vertikalen Bewegung mitgenutzt werden. Bei der Behandlung von Vorformlingen ist das Verfahren besonders vorteilhaft, da wegen der geringeren Höhe der Vorformlinge (im Vergleich zu fertig geblasenen Flaschen) der Antrieb weniger Hub zurücklegen muss. Für den Antrieb des Heizdorns wird insbesondere ein Linearantrieb verwendet, welcher bevorzugt einen Servoantrieb umfasst.

Insbesondere können mit der Erfindung die Behältnisse über mehr als 300°, bevorzugt mehr als 330° und noch bevorzugter mehr als 350° des Umlaufs einer Behandlungsmaschine behandelt werden, indem Sie über diesen Winkel in einer Behandlungsposition verweilen.

Der Erfindungsgegenstand wird anhand der nachfolgenden Zeichnungen beispielhaft erläutert.

Es zeigen:
- Fig. 1: eine Behandlungsvorrichtung entsprechend der vorliegenden Erfindung.
- Fig. 2: eine weitere Ausbildung einer Behandlungsvorrichtung entsprechend der vorliegenden Erfindung.
- Fig. 3A: einen Behälter, der in einer Behandlungsvorrichtung gemäß Fig. 1 oder 2 behandelt werden kann.
- Fig. 3B: eine Behandlungsstation entsprechend der vorliegenden Erfindung
- Fig. 4A: die erfindungsgemäße Behandlungsstation aus Fig. 3B und der Vorformling aus Fig. 3A.
- Fig. 4B: ein Druckschema zum Behandeln, Blasen von Vorformlingen entsprechend der Vorrichtung aus Fig. 3A.
- Fig. 5: ein Verfahrensschritt zum Behandeln von Behältern mit einer Blasvorrichtung entsprechend Fig. 2 entsprechend der vorliegenden Erfindung.
- Fig. 6: ein weiterer Verfahrensschritt entsprechend des Verfahrens zur Behandlung von Behältern mit einer Vorrichtung nach Fig. 2 entsprechend der vorliegenden Erfindung.
- Fig. 7: ein weiterer nachfolgender Verfahrensschritt zur Behandlung von Behältern mit einer erfindungsgemäßen Vorrichtung entsprechend Fig. 2.
- Fig. 8: ein weiterer, nachfolgender Behandlungsschritt des Verfahrens zur Behandlung von Behältern mit einer Vorrichtung nach Fig. 2 entsprechend der vorliegenden Erfindung.
- Fig. 9: ein weiterer, nachfolgender Behandlungsschritt des Verfahrens zur Behandlung von Behältern mit einer Vorrichtung nach Fig. 2 entsprechend der vorliegenden Erfindung.
- Fig. 10: ein Behandlungsschritt des Verfahrens zur Behandlung von Behältern mit einer Vorrichtung nach Fig. 2, mit einer dreiteiligen Blasform.
- Fig. 11: eine Weiterbildung einer Behandlungsvorrichtung im Rahmen der vorliegenden Erfindung.
- Fig. 12: eine weitere Weiterbildung der erfindungsgemäßen Vorrichtung und des erfindungsgemäßen Verfahrens zur Behandlung von Behältern im Hinblick auf Blasformung, mit einer Reckstange.
- Fig. 13: eine schematische Darstellung einer weiteren Weiterbildung einer Behandlungsvorrichtung zum Behandeln von Behältern im Hinblick auf das Füllen von Behältern mit Füllstationen, entsprechend der vorliegenden Erfindung.
- Fig. 14A: eine erfindungsgemäße Behandlungsstation zum Füllen von Behältern für eine Behandlungsvorrichtung entsprechend der vorliegenden Erfindung.
- Fig. 14B: Darstellung eines an einer Behandlungsstation entsprechend Fig. 14A angehefteten Behälters.
- Fig. 14C: schematische Darstellung der Druckverhältnisse in einer Behandlungsstation/Füllstation gemäß Fig. 14A und 14B.
- Fig. 15A: eine weitere Weiterbildung einer Behandlungsstation/Füllstation zur Verwendung einer Behandlungsvorrichtung gemäß Fig. 13.
- Fig. 15B: eine Darstellung eines angehefteten Behälters entsprechend der Behandlungsstation aus Fig. 15A.
- Fig. 15C: eine Darstellung der Druckverhältnisse in einer Behandlungsstation/Füllstation entsprechend den Fig. 15A und 15B.
- Fig. 16: eine weitere Weiterbildung einer Behandlungsstation/Füllstation zur Verwendung in einer Behandlungsvorrichtung gemäß Fig. 13.
- Fig. 17A: schematische Darstellung einer Behandlungsvorrichtung mit Behandlungsstationen zum Etikettieren von Behältern, wobei alle Elemente in Rundläuferform ausgebildet sind, entsprechend der vorliegenden Erfindung.
- Fig. 17B: eine weitere Weiterbildung einer Behandlungsvorrichtung zum Etikettieren von Behältern entsprechend der vorliegenden Erfindung.
- Fig. 18A: eine Behandlungsstation einer Vorrichtung gemäß Fig. 17A oder 17B entsprechend der vorliegenden Erfindung.
- Fig. 18B: eine schematische Darstellung des Transports von Behältern zu einem Zuführstern einer Vorrichtung gemäß Fig. 17B entsprechend der vorliegenden Erfindung.

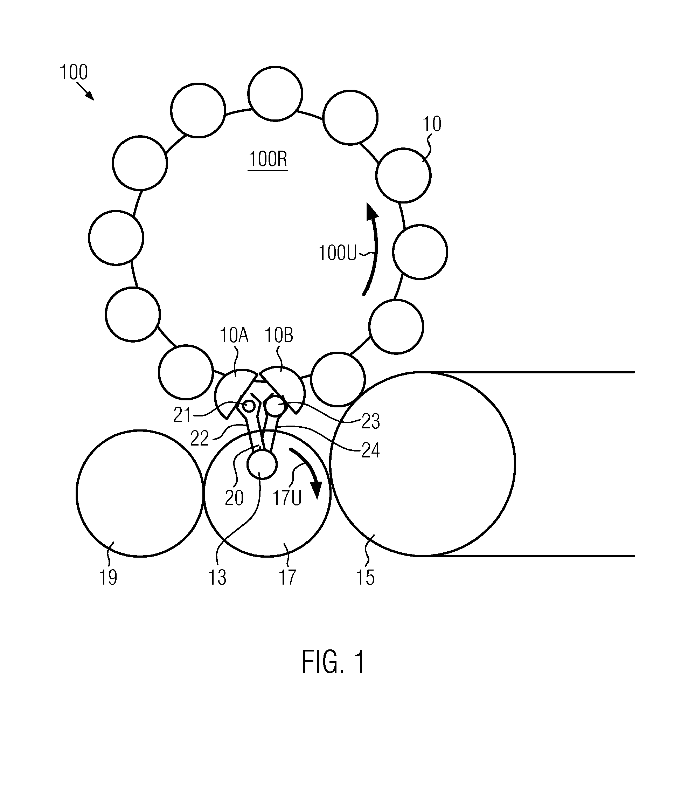

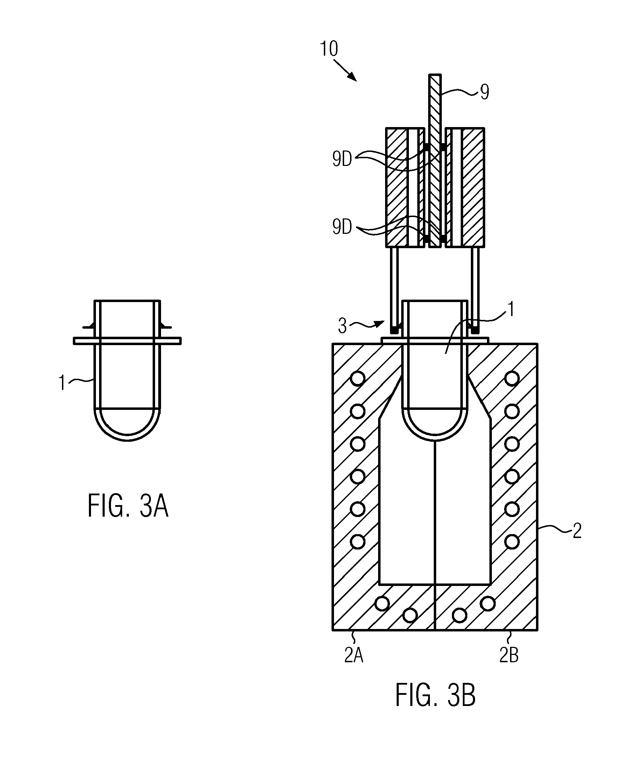

Die Fig. 1 zeigt eine Ausführungsform einer erfindungsgemäßen Behandlungsvorrichtung 100, die als rundlaufende Blasmaschine mit einem Blasrad ausgebildet ist. Die Behandlungsvorrichtung 100 trägt rein beispielhaft in Fig. 1 gezeichnet zwölf Behandlungsstationen 10, die in den nachfolgenden Fig. 3B - 4A näher beschrieben sind. Beispielhaft ist ein Drehsinn der Behandlungsvorrichtung 100 mit einem Behandlungsrad 100R durch den Pfeil 100U angedeutet. Beispielhaft ist eine der Behandlungsstationen 10 in aufgeklappter Form gezeigt. Dabei werden von nur einem Zuführ- und Entnahmestern 17, kurz als Stern bezeichnet, Behälter der Behandlungsstation 10, insbesondere ihren Hälften 10A und 10B zugeführt bzw. entnommen. Der Rotationssinn des Zuführ- und Entnahmesterns 17 ist durch Pfeil 17U angedeutet. Ferner zeigt Fig. 1 ein Vorbehandlungselement 15, beispielsweise einen Ofen, zur thermischen Konditionierung von zu behandelnden Behältern, bevor diese an eine Behandlungsstation gebracht werden. Ferner ist ein weiterverarbeitendes Rad 19 gezeigt, das Behälter von dem Zuführ- und Entnahmestern entnehmen kann. Insbesondere handelt es sich dabei um solche Behälter, die bereits in der Behandlungsvorrichtung 100 behandelt worden sind.

In Fig. 1 ist beispielhaft ein Greiferelement 20 angedeutet, das zwei Greiferarme/Greiferfingerelemente 22 und 24 aufweist. Die Greiferfingerelemente werden häufig auch abgekürzt als Greiferelemente bezeichnet. Obwohl diese Greiferelemente 22 und 24 in diesem Beispiel als V-förmig ausgebildete Arme angedeutet sind, die vom Element 20 verzweigen, kann es sich ebenso um zwei vollständig separierte Greiferelemente handeln. Das Greiferelement 20 ist an einem Schwenkelement 13 an dem Zuführ- und Entnahmestern 17 angebracht. Das Schwenkelement 13 ermöglicht ein Schwenken der Greiferarme 22 und/oder 24 in einer Ebene, die typischerweise parallel zur Ebene der Behandlungsvorrichtung 100 und damit auch parallel zur Ebene des Zuführ- und Entnahmesterns 17 ausgebildet ist. Insbesondere, wenn die Greiferarme 22 und 24 separat ausgebildet sind, können diese an einem gemeinsam oder einem jeweils einzeln vorgegebenen Schwenkelement befestigt sein. Ebenso ist es möglich, dass das Schwenkelement 13 auch eine Höhenverstellbarkeit der Greiferarme ermöglichen kann.

In Fig. 1 ist exemplarisch gezeigt, wie eine Blasform 10 geöffnet ist. Die Blasform 10 umfasst eine linke Hälfte 10A und eine rechte Hälfte 10B. Das Greiferelement 20 mit seinen Armen 22 und 24, die, wie oben diskutiert, auch vollständig separat ausgebildet sein können, greift Behälter 21 in der Blasformhälfte 10A sowie Behälter 23 in der Blasformhälfte 10B. Beispielsweise kann es sich bei Behälter 21 um einen zu behandelnden Behälter, etwa einen Vorformling, handeln. Entsprechend kann es sich bei Behälter 23 um einen geblasenen Behälter, etwa eine PET-Flasche, handeln.

Die Bewegung des Greiferelements 20 und seiner Arme 22 und 24 kann durch einen Servomotor (hier nicht gezeigt) erfolgen. Ebenso ist auch eine Kurvensteuerung mit entsprechenden Führungsrollen denkbar. In diesem Falle folgen die an den Greiferarmen 22 und 24 angebrachten Kurvenrollen einer festen Kurve. Der fertig geblasene Behälter 23 wurde hier durch die rechte Hälfte der Blasform 10B bei der Öffnungsbewegung bewegt, was den Platz für das Einbringen von dem Vorformling 21 geschaffen hat. Hierfür ist eine nichtgezeichnete Klammer an einer Blasform 10A, 10B vorgesehen, die den Behälter bei der Öffnungsbewegung mitnimmt. Ebenso könnte in einer Variante eine Klammer an nur einer Blasformhälfte vorgesehen sein, in welche ein Vorformling 21 eingegeben wird. Es wäre auch denkbar, die Eingabe und die Entnahme eines Behälters 21, 23 auf diese Weise durch denselben Greifer durchzuführen.

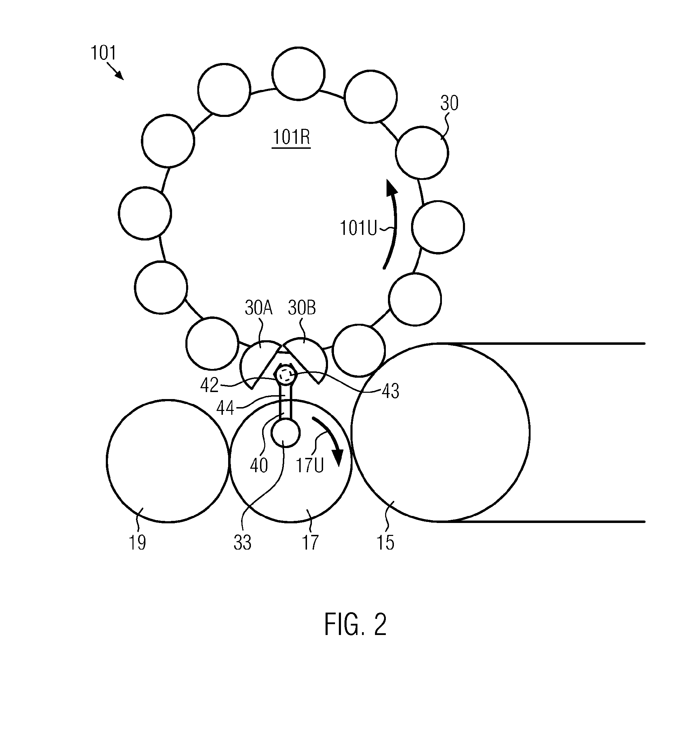

Die Fig. 2 zeigt Behandlungsvorrichtung 101, die der Behandlungsvorrichtung/Blasmaschine wie die Figur 1 gezeigt, ähnelt. Wiederum sind an einem Behandlungsrad / Blasrad 101 R eine Mehrzahl von Behandlungsstationen 30 angeordnet. Rein beispielhaft sind in Fig. 2, wie auch in Fig. 1 zwölf Behandlungsstationen angeordnet. Erneut ist im Bereich eines Zuführ- und Entnahmesterns 17 an dem Blasrad 101 R eine in zwei Hälften geöffnete Blasform gezeichnet. Die linke Blasformhälfte ist mit dem Bezugszeichen 30A bezeichnet, die rechte Hälfte ist mit dem Bezugszeichen 30B bezeichnet. Der Umlaufsinn des Blasrades mit den Behandlungsstationen/Blasstationen ist durch den Pfeil 101 U angedeutet. Der Zuführ- und Entnahmestern 17 trägt typischerweise eine Mehrzahl von Greiferelementen, von denen ein Greiferelement 40 exemplarisch dargestellt ist. Das Greiferelement 40 kann ähnlich wie in Figur 1 beim Greiferelement zwei Greiferfinger tragen, die gabelförmig ausgebildet sind. Allerdings liegen diese Greiferfinger für das Element 40 im Wesentlichen vertikal übereinander. Dadurch wird ein unteres Greiferelement 44 durch ein oberes Greiferarm 42 in der Darstellung von Fig. 2 überdeckt, was in der Figur durch eine gestrichelte Linie angedeutet ist. Die Greiferarme 42 und 44 können auch vollständig separat ausgebildet sein. Das Greiferelement 40 ist an einem Schwenkelement 33 am Zuführ- und Entnahmestern 17 angebracht. Das Schwenkelement 33 ermöglicht im Wesentlichen Schwenkbewegungen des Greiferelementes 40 und damit der Greiferarme 42 und 44 parallel in einer Ebene zum Zuführ- und Entnahmestern 17. Ebenso ermöglicht es damit eine Schwenkbewegung des Greiferelementes 40 respektive seiner Greiferarme in einer Ebene im Wesentlichen parallel zur Ebene des Blasrads 101 R. In der Darstellung der Fig. 2 ist angedeutet, dass der obere Greiferarm 42 einen Behälter 43 aus den geöffneten Formhälften 30A und 30B der Blasform entnimmt. Dabei kann der Behälter 43 beispielsweise ein fertig behandelter Behälter sein. Ein zur Behandlung eingeführter Behälter ist im Wesentlichen unterhalb des Behälters 43 befindlich und ist daher in der Darstellung der Fig. 2 nicht sichtbar.

Die Fig. 2 zeigt ebenso ein Vorbereitungselement 15, etwa einen Ofen, der dem Vorbereitungselement 15 in der Fig. 1 im Wesentlichen entsprechen kann. Ebenso zeigt die Fig. 2 ein weiteres Rad 19, das die behandelten Behälter zur weiteren Verarbeitung, beispielsweise einem Etikettieren und/oder Abfüllen, vom Zuführ- und Entnahmestern 17 übernehmen kann. Der Drehsinn des Zuführ- und Entnahmesterns 17 ist durch den Pfeil 17U angedeutet. In dieser Ausführungsform ist der Greifer 40, 42, 44 höhenverstellbar ausgebildet, um die in einer höheren Ebene, von der Blasstation 30 entnommene Behälter auf das gleiche Höhenniveau abzusenken, welches auch dem Transportniveau des weiteren Rades 19 oder dem des Ofens 15 entspricht. Alternativ ließe sich der Behälter auch im weiteren Rad 19 absenken.

Fig. 3A zeigt einen Vorformling 1, der einen Behälter/ein Behältnis darstellt, wie er im Rahmen von Behandlungsvorrichtungen entsprechend der vorliegenden Erfindung behandelt werden kann. Der Vorformling 1 aus Fig. 3A kann an ein Behandlungselement/eine Blasstation 10, wie in Fig. 3B gezeigt, angeheftet werden. Dort kann der Vorformling beispielsweise mit einer radialen Dichtung 3 abgedichtet werden, so dass von oben einströmende Druckluft den Vorformling 1 blasformen kann. Dabei ist der Vorformling 1 beispielsweise durch den genannten Ofen 15 thermisch vorkonditioniert, so dass er sich blasformen lässt. Fig. 3B zeigt ferner eine Blasform 2, die beispielsweise zur Blasformung eines Behälters aus dem Vorformling 1 verwendet werden kann. Die Blasform 2 besteht beispielsweise aus zwei Hälften 2A und 2B. Typischerweise kann die Blasform 2 aufgeklappt werden, um insbesondere einen fertig geblasenen Behälter aus der Blasform zu entnehmen. Zusätzlich kann in Fig. 3B eine Reckstange 9 verwendet werden, um den zu formenden Behälter vorzurecken. Die Reckstange 9 kann durch eine Dichtung 9D abgedichtet werden.

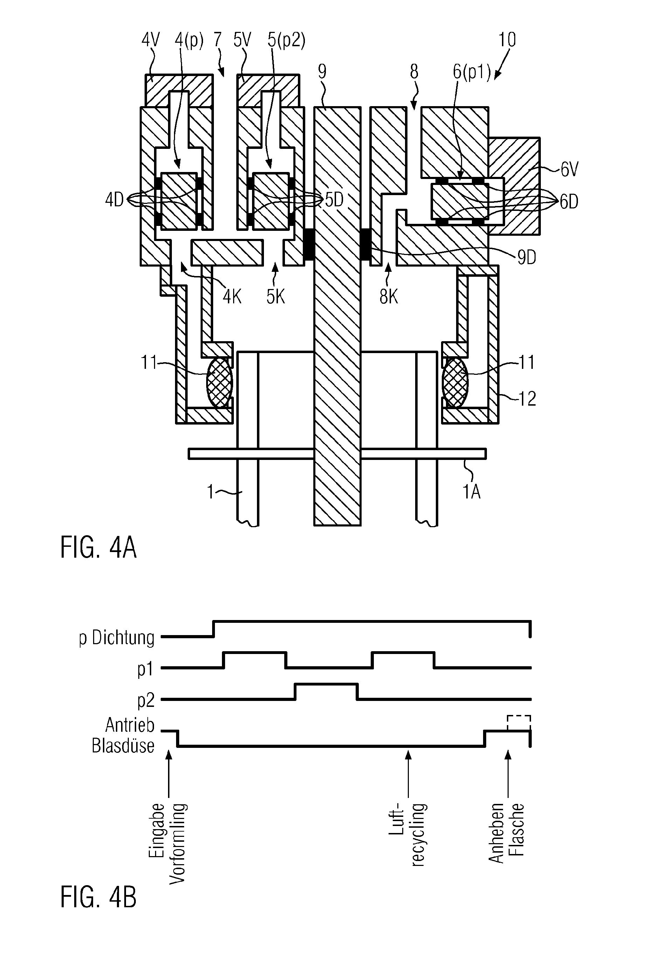

Die Fig. 4A zeigt die erfindungsgemäße Behandlungsstation 10 aus Fig. 3B in größerem Detail, wobei hier speziell die Blasdüse und eine Ventileinrichtung zu sehen sind. Der Vorformling 1 hat einen Rand 1A, oberhalb dessen er in das Blaselement 10 eingeführt ist. In der Blaseinheit 10 sind ferner bewegliche Ventile 4, 5 und 6 gezeigt. Die Ventile 4, 5 und 6 haben ihre Dichtungselemente 4D, 5D und 6D. Die Ventile sind jeweils beweglich durch Druckbeaufschlagung der Vorsteuerventile 4V, 5V, 6V. Üblicherweise weisen die Kolben der Ventile 4, 5 ,6 zu der Seite der Vorsteuerventile hin größere Flächen auf, damit ein möglichst geringer Vorsteuerdruck bereitgestellt werden kann. Auf diese Darstellung wurde jedoch der Einfachheit wegen verzichtet. Die Ventile 4, 5, 6 können ebenso alternativ oder zusätzlich elektrisch steuerbar sein. Die Ventile 4, 5, 6 sind insbesondere derart ausgebildet, dass sie die Zuleitung von Druckluft von den Kanälen 7 und 8 zu den Kanälen 4K, 5K, 8K und damit zum Behälter 1 öffnen oder verschließen können. Über Kanal 7 auf der linken Seite der Reckstange 9, sowie über Kanal 8 auf der rechten Seite Reckstange 9 können beispielsweise die bei der Blasformung benötigten Drücke P1, geringer Druck (Vorblasdruck), sowie P2, Fertigblasdruck, bereitgestellt werden. Im Kanal 7 wird ständig ein Fertigblasdruck von beispielsweise 40 bar bereitgestellt. Im Kanal 8 wird ein Druck von beispielsweise 15 bar bereitgestellt.

Nach dem Aufsetzen der Blasdüse 10 auf dem Behälter 1 sind zunächst alle Ventile 4, 5, 6 geschlossen. Als erstes werden die Ventile 6 und 4 geöffnet. Ventil 6 wird geschaltet, um den Behälter durch die Freigabe der Verbindung von Kanal 8 zu Kanal 8K bei einer gleichzeitigen Bewegung der Reckstange 9 vorzublasen. Praktisch gleichzeitig oder geringfügig vorher wird Ventil 4 geöffnet, um den Behälter mit der elastischen Dichtung 11 über eine Freigabe des Kanals 7 zu 4K abzudichten.

Nach wenigen Zehnteln einer Sekunde wird Ventil 6 wieder geschlossen und Ventil 5 geöffnet, um den Strömungsweg von Leitung 7 zu Leitung 5K freizugeben, so dass der Behälter durch den noch größeren Druck fertig geblasen werden kann. Nach weiteren einigen paar Zehntel Sekunden wird Ventil 5 wieder geschlossen und die Druckluft im Behälter zuerst teilweise durch ein Öffnen des Ventils 6 in einen Medienspeicher, beispielsweise einem Druckluftspeicher, mit dem Vorblasdruck recycelt und schließlich über ein hier nicht gezeigtes Entlastungsventil in die Umgebung abgelassen.

Danach oder bevorzugt auch während des Ablassens von Druckluft in den Medienspeicher / in die Druckluftleitung 8 bzw. in die Atmosphäre wird die Blasform entriegelt, geöffnet und der Behälter von der Blasdüse 10 bei immer noch geöffnetem Ventil 4 angehoben. Ventil 4 ist so lange geöffnet, bis der Behälter durch ein Greifelement des Sterns, also des Zuführ- und Entnahmesterns gegriffen wird. Die Zeitspanne vom Zeitpunkt der Entlastung zum Zeitpunkt des Öffnens der Blasform ist extrem vom Behältnis, also der Form des Behältnisses und dem Material des Behältnisses, und den Drücken abhängig. Bei gängigen Einweg-PET-Flaschen mit beispielsweise 0,2 mm durchschnittlicher Wandstärke und mit Petaloidboden und 10 bar Vorblasdruck wäre es kaum möglich, noch während des Recycelns auf 10 bar schon die Blasform zu öffnen, da ansonsten die Flasche stark deformiert würde. Hier würde es sich anbieten, nur noch die letzten 1 bis 2 bar des Überdrucks nach dem Öffnen abzulassen. Es wäre aber auch denkbar, weitere Recyclingstufen / -ventile einzubauen, um auch geringere Drücke zu recyceln. Auf jeden Fall lässt sich so Prozesszeit gewinnen.

Die Fig. 4B zeigt schematisch und ohne Berücksichtigung der tatsächlichen Druckwerte, die zeitliche Entsprechung der verwendeten Drücke, wobei dieser Darstellung die Zeit von links nach rechts laufen soll. Der Dichtungsdruck, der vom Wert her dem Druck P2, d. h. dem Fertigblasdruck, entsprechen kann, ist in der oberen Kurve dargestellt. Der niedrigere Druck P1 ist in der darunter liegenden Kurve dargestellt. Der Druck P2, der beispielsweise bis zu 40 bar zum Fertigblasen der Behälter betragen kann, ist in der darunter liegenden Kurve dargestellt. Die unterste der vier Kurven zeigt schematisch den Antrieb der Blasdüse 10. Die Eingabe des Vorformlings 1 erfolgt zu Beginn. Der obere Wert der untersten Kurve, die mit "Antrieb Blasdüse" bezeichnet ist, signalisiert das Anheben und Bewegen. Dieses erfolgt nur praktisch unmittelbar bei der Eingabe und nachdem der Behälter, beispielsweise eine Flasche, zwecks Ausschleusung bewegt werden soll. Während des Blasvorgangs ist der Vorformling respektive der in Behandlung befindliche Behälter in der Blasform befindlich. Nach etwa drei Viertel des Umlaufs einer Blasstation mit dem Blasrad findet das Recyceln von Blasluft statt, wie es in vielen Blasstationen angewendet wird. Bei einem umfänglichen Greifen des Behälters mit der Blasdüse müsste noch ein weiteres Anheben nach dem Greifen mit dem Greiferelement stattfinden (gestrichelt in der untersten Kurve angedeutet), um den Behälter in einer horizontalen Ebene abtransportieren zu können. Alternativ kann auch das Greifelement elastisch gelagert oder höhenverstellbar, bzw. -bewegbar sein.

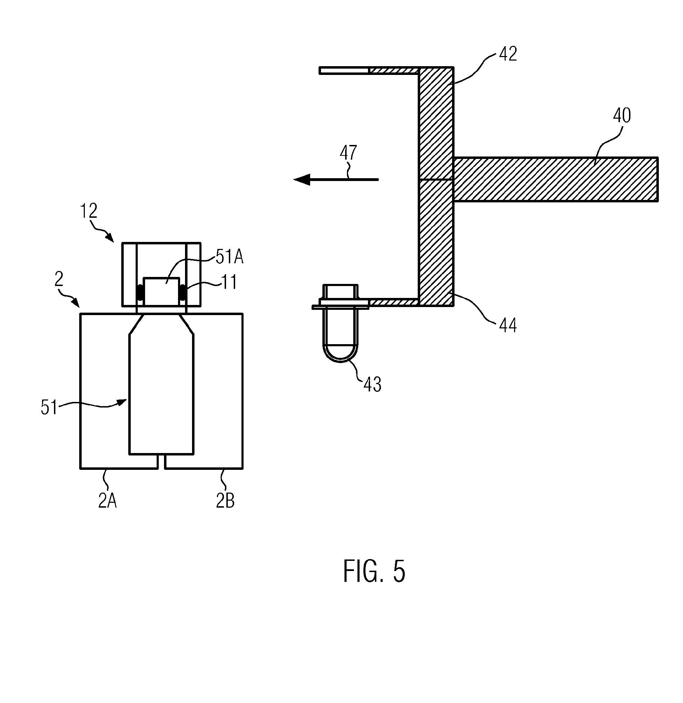

Nachfolgend zeigen die Figuren 5 bis 9 Schritte zur Blasformung eines Behälters mit einer Blasmaschine wie sie beispielsweise in Fig. 2 dargestellt ist. Dabei beziehen sich die Figuren 5 bis 9 jeweils auf eine Behandlungsstation, beispielsweise eine Blasstation wie sie an einer Behandlungsvorrichtung 101 vorgesehen sein kann, die in Fig. 2 gezeigt ist. In den Figuren 5 bis 9 ist ein Greiferelement 40 dargestellt, welches am Zuführ- und Entnahmestern 17, in den Figuren 5 bis 9 nicht gezeigt, befestigt ist. Das Greiferelement 40 hat zwei Greiferarme 42 und 44. Mit dem Bezugszeichen 42 ist dabei der obere Greiferarm bezeichnet. Mit dem Bezugszeichen 44 ist der untere Greiferarm bezeichnet. Die Greiferarme 42 und 44 sind in dieser Ausführung in einem festen vertikalen Abstand angeordnet, könnten aber auch gemeinsam und/oder separat verschiebbar angetrieben sein. Ein zu behandelnder Behälter, beispielsweise eine Vorformling, ist mit dem Bezugszeichen 43 bezeichnet. Ein bereits blasgeformter Behälter, beispielsweise eine Flasche, ist mit dem Bezugszeichen 51 bezeichnet. In den Figuren 5 bis 9 sind durch Pfeile horizontale oder vertikale Bewegungen der Elemente relativ zueinander angedeutet. In Fig. 5 zeigt beispielsweise der Pfeil mit dem Bezugszeichen 47 eine Relativbewegung des Greifelementes 40 mit seinen beiden Armen 42 und 44 bezüglich der in einer Blasform geblasenen Flasche 51 an. Die Bewegung des Greifers ist eine Schwenkbewegung wie bei Rundläufern üblich. Die Blasform öffnet sich so, wie in Fig. 2 gezeigt. Es versteht sich, dass in dieser Figur es sich lediglich um eine schematische Darstellung handelt.

Die Fig. 5 zeigt eine Blasform 2 mit Blasformhälften 2A und 2B, wie sie bereits in Fig. 3B skizziert sind. Ein Behälter 51, etwa eine Flasche, ist unmittelbar nach Beendigung des Blasformens in der Blasform gezeigt. Der Behälter 51 hat ein Oberteil 51 A, etwa ein Hals, der von einem ringförmigen Dichtungselement 11 in einem unteren Teil einer Blasdüse 12 gehaltert wird. Dabei gelten für das Haltern die Ausführungen wie sie bereits im Zusammenhang mit Fig. 4A und Fig. 4B diskutiert wurden.

Das Greiferelement 40 hat in Fig. 5 lediglich einen Vorformling 43 im unteren Greiferarm 44 zum Einführen gegriffen. Der obere Greiferarm 42 ist in Fig. 5 noch leer.

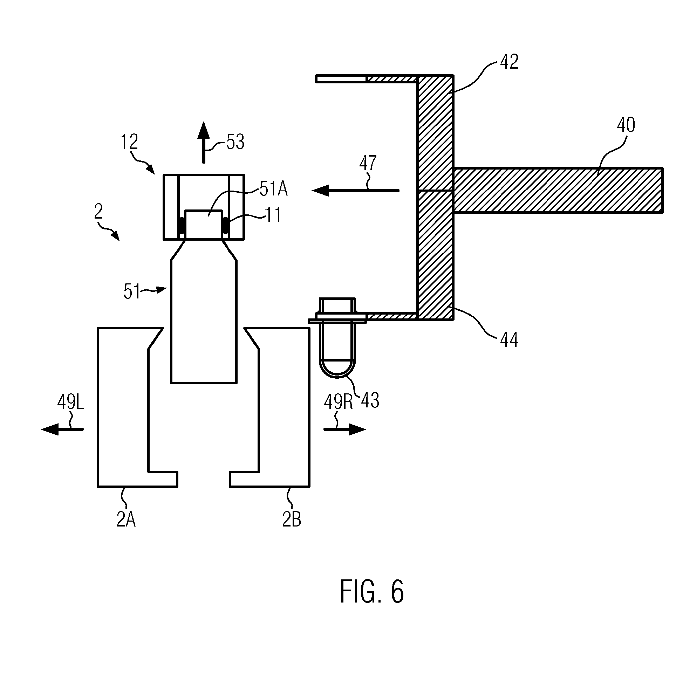

Fig. 6 zeigt als unmittelbar nächsten Schritt des Verfahrens das Öffnen der Blasform 2 (oder 30 aus Fig. 2), wobei die Blasformhälften 2A und 2B sich auseinander bewegen, wie durch die Pfeile mit den Bezugszeichen 49L und 49R angedeutet ist. Das untere Blasdüsenelement 12 bewegt sich dabei im Wesentlichen vertikal aus der Blasform heraus. Der mit Hilfe der Dichtung 11 festgehaltene Behälter 51 wird nach oben gezogen. Mit anderen Worten, der Behälter 51 folgt der Bewegung der Blasdüse 12. Die Elemente des Greiferelementes 40 sind mit gleichen Bezugszeichen versehen wie bereits in Fig. 5. Insbesondere nähert sich der Behälter 43 der Behandlungsform. Mit dem Pfeil 47 ist weiterhin die relative Bewegung des Greiferelementes und der Blasstation angedeutet. Es versteht sich, dass auch die Bewegung, die hier durch den Pfeil 53 angedeutet ist, einen Hub nach oben bedeutet. Dabei kann es prinzipiell ebenso möglich sein, zusätzlich oder alternativ die Blasform 2 nach unten abzusenken.

Zusammenfassend ist in Fig. 6 dargestellt, dass die Blasdüse 12 mit ihrer Dichtung 11 an dem/der Behälter/Flasche bleibt und diese/diesen mit nach oben zieht in einer im Wesentlichen vertikalen Richtung, wie durch den Pfeil 53 angedeutet.

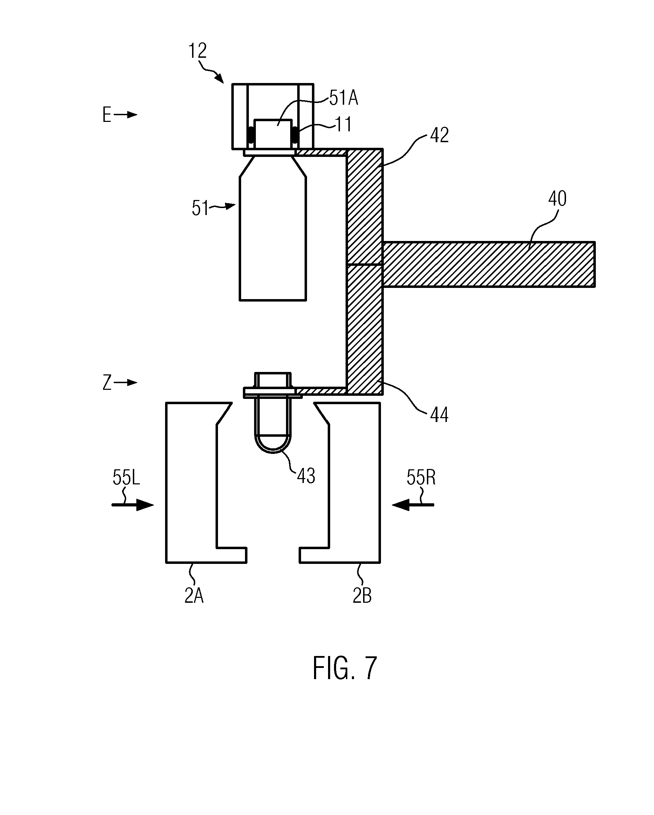

Die Fig. 7 skizziert als nächsten Schritt des Verfahrens, dass die Blasendüse mit ihrem unteren Teil 12 und der Dichtung 11 sowie der daran heftenden oder hängenden Flasche 51 die Entnahmeposition erreicht hat. Das Greiferelement 40 mit seinem unteren Greiferarm 44 und dem oberen Greiferarm 42 hat ebenso die Position zur Übergabe respektive Entnahme der Behälter 43 respektive 51 erreicht. Der obere Greiferarm 42 kann den Behälter 51 an dessen oberen Teil, beispielsweise dem Flaschenhals, fassen. Der untere Greiferarm 44 übergibt den Behälter 43 an die Blasform der Blasstation, also in die Behandlungsposition. Die beiden Blasformhälften 2A und 2B schließen sich zur Aufnahme des Vorformlings 43 wieder. Der Schließvorgang ist durch die Pfeile 55L und 55R angedeutet. Die Bewegung der Blasformhälften ist im Wesentlichen eine horizontale Bewegung. In Fig. 7 ist also die im Wesentlichen parallele Übergabe des Behälters 43 an die Blasform an einem Zuführpunkt Z skizziert und im Wesentlichen parallel dazu die Übergabe oder das Entnehmen des fertig geblasenen Behälters 51 an einem Übergabepunkt E. Es versteht sich, dass abhängig von gerätetechnischen oder aufgabentechnischen Spezifikationen die Übergabe- und Entnahmepunkte Z und E auch anders angeordnet sein können, beispielsweise kann der Entnahmepunkt des fertig geblasenen Behälters 51 auch unterhalb des Zuführpunktes Z liegen.

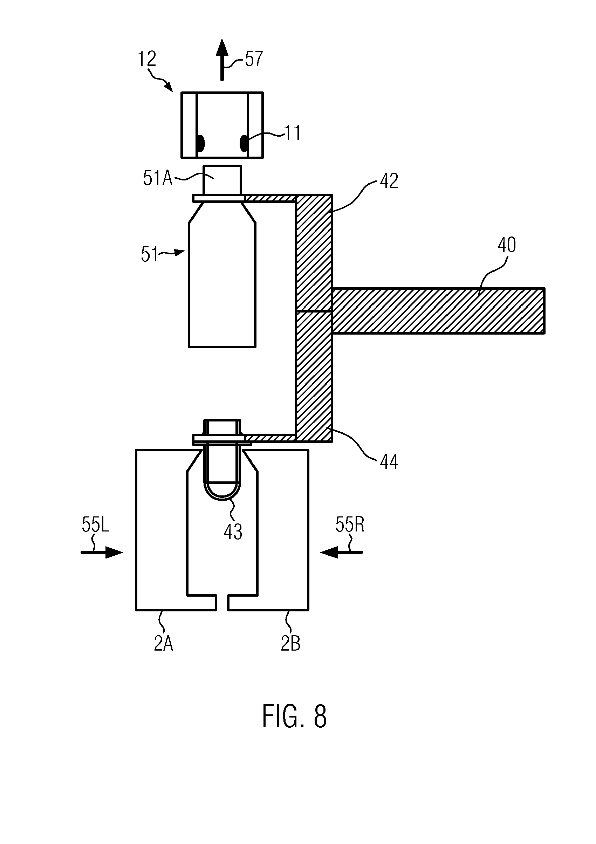

In Fig. 8 ist als nachfolgender Schritt des Verfahrens skizziert, wie sich für den oberen Greiferarm 42 die Blasdüse 12 mit ihrer Dichtung 11 von dem oberen Teil des fertig geblasenen Behälters 51 löst. Beispielhaft ist durch den Pfeil 57 angedeutet, dass die Blasdüse sich im Wesentlichen vertikal von dem oberen Teil 51 A des Behälters 51 löst. Der Behälter 51 ist damit frei von der Blasdüse 12. Der Behälter 51 hängt an dem Greiferarm 42 oder wird damit im Wesentlichen nur noch durch den Greiferarm 42 festgehalten oder gegriffen. Im unteren Teil der Fig. 8 ist angedeutet, dass die Blasformhälften 2A und 2B fast vollständig um den Vorformling 43 geschlossen sind. Die Bewegungsrichtung der Blasformhälften 2A und 2B ist erneut jeweils durch die Pfeile 55L und 55R angedeutet. Der Behälter 43 wird in Fig. 8 weiterhin vom Greiferarm 44 festgehalten und/oder gegriffen bzw. auch schon losgelassen.

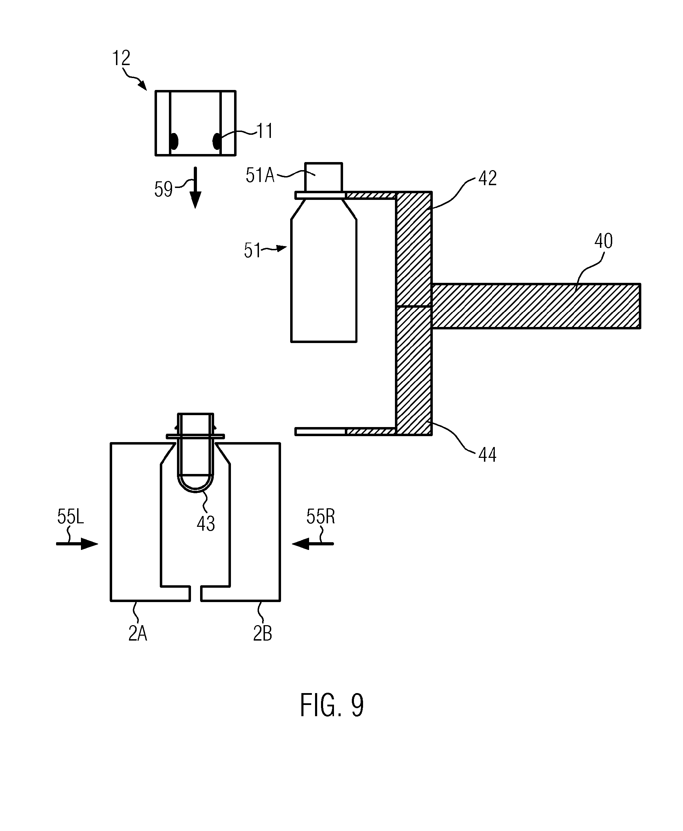

Die Fig. 9 zeigt als nächsten Schritt, wie das Greiferelement 40 mit den Greiferarmen 42 und 44 und der mittels des oberen Greiferarmes 240 gegriffenen Flasche 51 sich im Wesentlichen horizontal relativ zur Blasstation bewegt. Die Bewegungsrichtung ist durch den Pfeil 61 angedeutet. D.h., in einem nachfolgenden Schritt kann die fertig geblasene Flasche 51 vom Zuführ- und Entnahmestern weiter transportiert werden. Dieser wird beispielsweise ein weiteres Greiferelement, hier nicht gezeigt, einer weiteren Blasstation, hier nicht gezeigt, zuordnen und nachfolgend wieder mit einem Schritt wie in Fig. 5 angedeutet, beginnen. In Fig. 9 sind die weiteren vorbereitenden Schritte hinsichtlich eines erneuten Zyklus der in den Figuren 5 bis 9 dargestellten Schritte angedeutet. Mit dem Bezugszeichen 59 ist die im Wesentlichen vertikale Bewegungsrichtung der Blasdüse 12 der Blasstation mit ihrer Dichtung 11 angedeutet. Sie bewegt sich relativ zur Blasform auf die Blasform zu. In Fig. 9 ist das im Wesentlichen eine vertikale Bewegung nach unten. Die Blasform mit den Blasformhälften 2A und 2B hat den Vorformling 43 vom Greiferelement 44 übernommen. Die Blasdüse kann nachfolgend, hier nicht gezeigt, an dem Vorformling 43 andocken und ihn danach zu einer Flasche blasen, wie bereits in Fig. 5 skizziert.

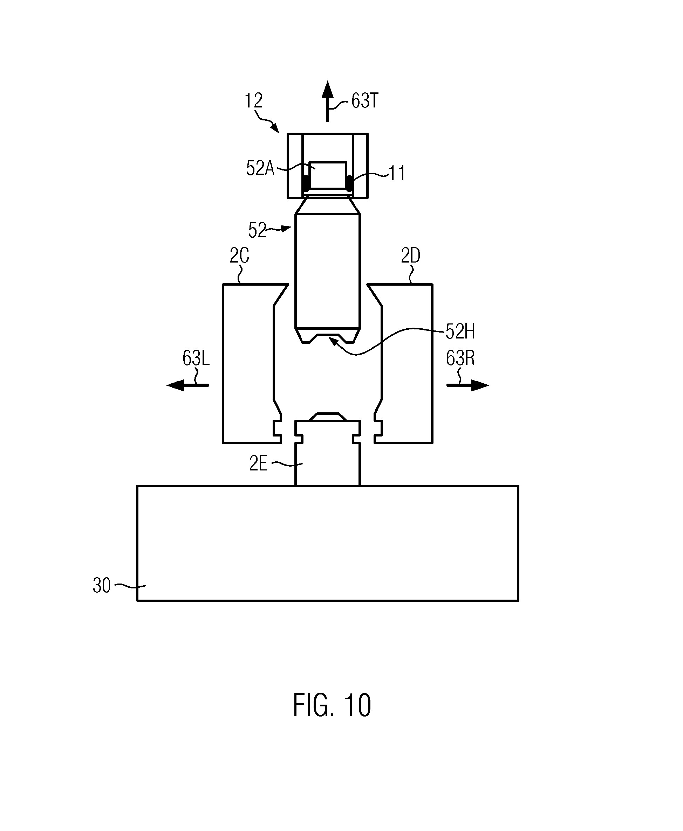

Die Fig. 10 zeigt in einer weiteren Weiterbildung Elemente innerhalb eines Verfahrens, wie sie in den Figuren 5 bis 9 dargestellt sind. Die Flasche 52 mit ihrem Oberteil 52A wird wiederum von einer Blasdüse 12 mit einer im Wesentlichen radialen Dichtung 11 geführt. Die Bewegungsrichtung der Blasdüse ist durch den Pfeil 63T angedeutet. Eine Blasform hat in der Fig. 10 zusätzlich zu den Blasformhälften 2C und 2D, also eine linke und eine rechte Blasformhälfte, ein Bodenelement, beispielsweise einen Bodenstempel 2E als ein drittes Element der Blasform. Das Bodenelement 2E kann in einen Hinterschnitt 52H der fertig geblasenen Flasche 52 eingreifen. Die Bewegungen der Blasformhälften 2C und 2D relativ zur Flasche 52 sind durch die Pfeile 63L und 63R angedeutet. Die fertig geblasene Flasche 52 muss eine Bewegung relativ zum Bodenelement 2E ausführen, etwa eine vertikale Bewegung, um sich von dem Bodenelement lösen zu können. Mit dem Bezugszeichen 30 ist ein im Wesentlichen stationärer Boden der Blasstation 30 wie in Fig. 2 skizziert dargestellt. Das Formelement 2E, also etwa ein Bodenstempel, kann im Wesentlichen stationär an dem Bodenelement 30 der Blasstation angeformt oder ausgebildet sein.

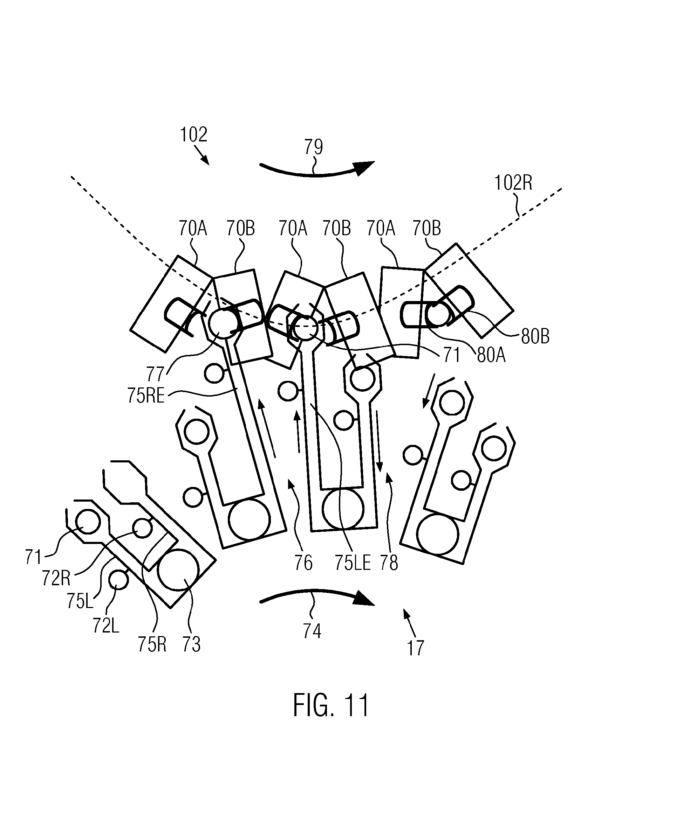

Die Fig. 11 skizziert in einer weiteren Weiterbildung eine Behandlungsvorrichtung 102 mit einem Behandlungsrad 102R, die der Behandlungsvorrichtung in Fig. 1 entsprechen kann. Dabei sind Blasformhälften 70A und 70B in einem aufgeklappten Zustand gezeichnet. Der Drehsinn des Blasrades 102R ist mit dem Bezugszeichen 79 angedeutet. Auf einem Zuführ- und Entnahmestern 17, der dem Stern 17 wie in Fig. 1 skizziert entsprechen kann, sind Greiferelemente skizziert. Die Bewegungsrichtung des Zuführ- und Entnahmesterns ist durch den Pfeil 74 angedeutet. An einem Schwenkgelenk 73 sind jeweils ein linker Greiferarm 75L und ein rechter Greiferarm 75R angedeutet. Diese können beispielsweise Behälter etwa Vorformlinge 71 halten, um diese an Behandlungsstationen mit Blasformen 70A/70B zuzuführen. Zusätzlich sind in Figur 11 Klammern 80A und 80B gezeichnet. Die Klammer 80A ist in der Blasformhälfte 70A angeordnet. Die Klammer 80B ist in der Blasformhälfte 70B angeordnet. Die Klammern 80A und 80B können den zu behandelnden Behälter in der Blasform 70 wenigstens teilweise fixieren, insbesondere wenn die Blasformhälften 70A und 70B wieder geschlossen werden respektive geschlossen sind, wie in der rechten Blasform von Figur 11 angedeutet ist. Bevorzugt sind die Klammern 80A und 80B in Richtung der Blasformöffnung federnd gelagert. Alternativ kann auch nur an einer der Blasformhälften 70A, 70B eine Klammer 80A, 80B angeordnet sein. Die Greiferarme 75L und 75R können Führungsrollen 72L und 72R aufweisen, mit denen die Bewegung der Greiferarme gesteuert werden können. Ein Servomotor, hier nicht gezeigt, könnte alternativ auch eine im Wesentlichen lineare teleskopartige Bewegung der Greiferarme 75L, 75R vorsehen. Beispielsweise ist in Fig. 11 skizziert, dass ein ausgefahrener Greiferarm 75RE einen fertig behandelten Behälter 77 aus einer Blasform 70B entnimmt. Die Bewegung des Greiferarms ist durch den Pfeil 76 angedeutet. Ebenso ist skizziert, wie der linke Greiferarm 75L im ausgefahrenen Zustand 75LE den Behälter 71 an die Blasform 70A übergibt. Die Richtung der Rückbewegung des jeweiligen Greiferarms ist durch den Pfeil 78 angedeutet. Die Fig. 11 skizziert also im Wesentlichen eine Weiterbildung einer Behandlungsvorrichtung/Blasmaschine wie in Fig. 1 angedeutet.

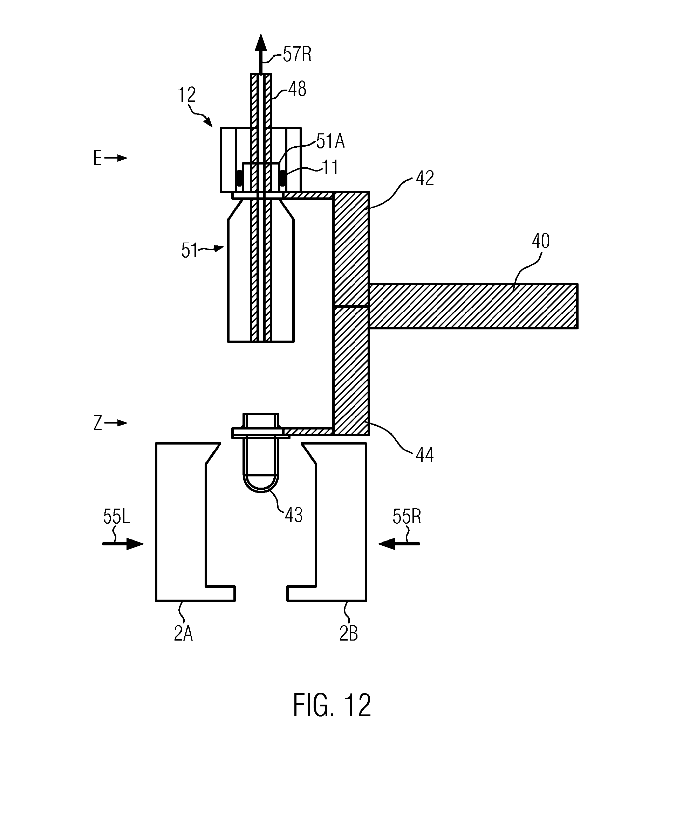

Die Fig. 12 zeigt eine weitere Weiterbildung einer Behandlungsvorrichtung wie sie im Rahmen der Figuren 5 bis 9 skizziert wurde. Die Fig. 12 weist im Wesentlichen die gleichen Elemente auf wie sie in den Figuren 5 bis 9 vorkommen. Diese sind mit denselben Bezugszeichen bezeichnet und werden hier nicht erneut erläutert. Zusätzlich ist in Fig. 12 eine Reckstange 48 angedeutet. Die Reckstange 48 dient zum Recken eines Vorformlings im Rahmen des Streckblasens. Die Reckstange 48 muss im Rahmen des Reckvorgangs einen Hub zurücklegen. Ebenso, nach dem Recken, muss diese Reckstange wieder in eine Ausgangsposition zurückgeführt werden. Dabei kann die Reckstange 48 zusätzlich den fertigen Behälter 51 transportieren. Der durch die Reckstange 48 zurückgelegte Hub muss konstruktionsbedingt sowieso von der Reckstange zurückgelegt werden. Der Pfeil 57R deutet eine Bewegung der Reckstange 48 nach oben an. Die Pfeile 55L und 55R deuten die Bewegungen der Blasformhälften 2A und 2B an.

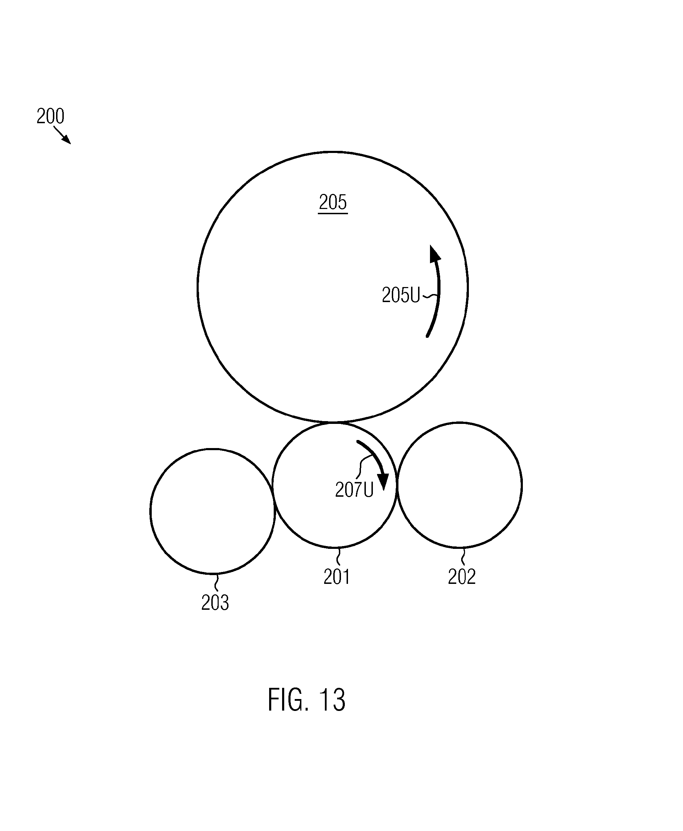

In Fig. 13 sind rein schematisch Elemente einer weiteren Weiterbildung einer Behandlungsvorrichtung der vorliegenden Erfindung angedeutet. Fig. 13 skizziert eine Behandlungsvorrichtung 200 von zum Füllen von Behältern (hier nicht gezeigt). Diese Behandlungsvorrichtung 200 ist wieder im Wesentlichen als Rundläufer, ähnlich den Blasvorrichtung der Figuren 3 und 4, ausgebildet. Ein Umlaufsinn des Behandlungsrades / Füllrades 205 ist durch den Pfeil 205 angedeutet. Ein Zuführ- und Entnahmestern 201 dreht sich etwa wie durch den Pfeil mit dem Bezugszeichen 207 angedeutet. Dabei können durch einen Stern 202 zu füllende Behälter, beispielsweise Dosen, Flaschen oder Gebinde, zugeführt werden und durch einen Stern 203 diese vom Zuführ- und Entnahmestern 201 zur weiteren Verarbeitung entnommen werden. Auf dem Behandlungsrad 205 kann eine Vielzahl von Füllstationen 250 vorhanden sein, wie sie im Folgenden beschrieben werden.

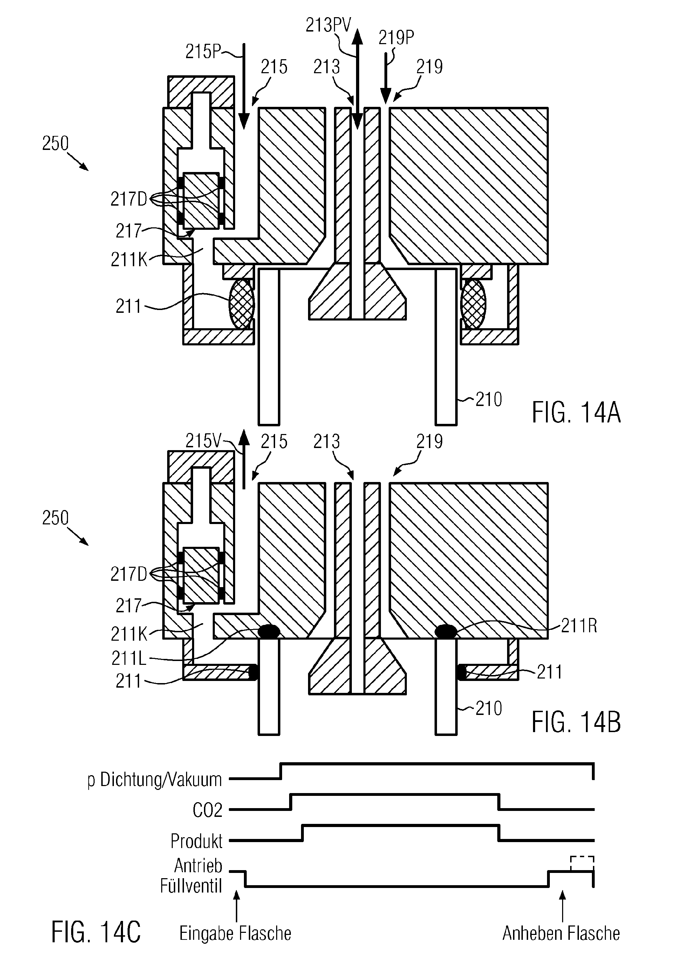

Die Figuren 14A bis 14C zeigen ähnlich den Figuren 2A und 2B das Behandeln eines Behälters, beispielsweise einer Flasche oder einer Dose 210 an einem Behandlungselement 250 einer Füllstation. Ähnlich zur Blasmaschine wie in den Figuren 2A, 2B, 3 und 3 angedeutet, vergleiche auch Figuren 5 bis 9, kann der Behälter 210 durch Druckvariation fixiert werden, also festgeheftet werden, und dann mittels des Behandlungselements angehoben werden. Fig. 14A zeigt einen Kanal 219. Durch den Kanal 219 kann beispielsweise das Produkt mit einem Druck 219P eingefüllt werden. Dieses Produkt könnte beispielsweise Limonade oder Cola sein. Durch den Kanal 213 kann, wie durch den Doppelpfeil 213PV angedeutet, mit Hilfe von Kohlensäure, CO₂, eine Vorspannung oder ein Rückgas eingefüllt oder entnommen werden. Eine im Wesentlichen radiale Dichtung mit dem Bezugszeichen 211 ist in Fig. 14A ebenfalls angedeutet. Ferner ist ein Ventil 217 mit Ventildichtung 217D angedeutet. Dieses Ventil kann pneumatisch oder elektrisch bewegt werden und kann den Kanal 211 K verschließen. Durch den Kanal 215 kann ein Dichtungsdruck für die radiale Dichtung erzeugt werden. Der Kanal 215 kann auch mit dem Kanal für die CO₂ Versorgung verbunden werden, hier nicht gezeigt. Bei dem Ventil 217 muss es sich nicht zwangsweise um ein Sitzventil handeln, es könnte auch ein Wegeventil verwendet werden

In der Fig. 14B sind die Elemente der Figur 14A erneut skizziert und mit dem Pfeil 215V ist angedeutet, dass ein Unterdruck, beispielsweise Vakuum, bezüglich des Kanals 215 erzeugt wird, wodurch bei der skizzierten Ventilstellung die Dose/der Behälter 210 über die Dichtungen 211 L und 211 R festgehalten werden kann.

Die Figur 14C zeigt rein schematisch und ohne Berücksichtigung der tatsächlichen Druckgrößen ein zeitliches Ablaufschema der Druckverhältnisse wie in den Figuren 14A und 14B skizziert. Dabei läuft die Zeit von links nach rechts in der Figur 14C. Die oberste Kurve, die in der Figur 14C skizziert ist, bezieht sich auf den Dichtungsdruck bzw. Unterdruck. Der CO₂ Druck ist durch die zweite Linie von oben skizziert. Das eigentliche Abfüllen ist durch die dritte Linie von oben skizziert. Der Antrieb des Füllventils hinsichtlich des Anhebens und Absenkens der Flasche respektive der Dose ist durch die vierte Kurve, also die unterste Kurve angedeutet. Der in der vierten Kurve skizzierte obere Wert bedeutet das Anheben oder Führen des Behälters, beispielsweise vor dem Füllen. Der untere Wert der vierten Kurve bedeutet eine Halterung des Behälters in der Füllstation während des Füllvorgangs, also in der Behandlungsposition. Auch in der Füllstation, wie in den Figuren 14A und 14B angedeutet, wird ein Behälter etwa eine Dose oder Flasche 210 an das untere Ende des Behandlungselements 250 der Füllstation, etwa einem Füllventil, angeheftet und kann dann mit Hilfe dieses unteren Teils bewegt werden, beispielsweise in vertikaler oder horizontaler Richtung. Die Bewegungen können ähnlich den Bewegungen sein, wie sie im Hinblick auf die Blasstation in den Figuren 5 bis 9 diskutiert worden sind. Zum Auflösen des Vakuums und zum Entnehmen des Behälters kann noch ein zweites, nicht gezeigtes Ventil vorhanden sein.

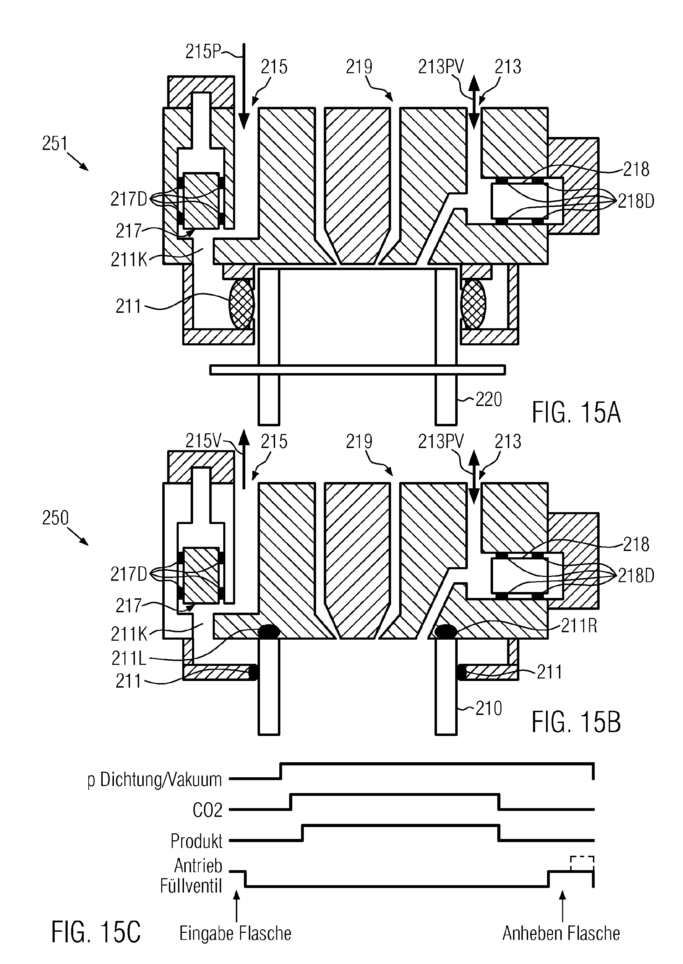

Die Figuren 15A bis 15C zeigen eine weitere Weiterbildung einer Füllstation wie sie in der Fig. 13 skizziert ist. Im Gegensatz zu den Figuren 14A und 14B wird in der Fig. 15A ein als Behandlungselement 251 ein sogenannter Freistrahlfüller für Flaschen angedeutet. Das Produkt, z.B. Saft, wird durch den Kanal 219 in den Behälter 220 zugeführt. Der Kanal 215 entspricht im Wesentlichen dem Kanal 215 wie in der Fig. 14A skizziert. Den Bezugszeichen 215P wird ein Druck zur Dichtung, also ein Dichtungsdruck, über diesen Kanal auf die Dichtung 211 zugeführt. Ein bewegliches Ventil 217 mit Ventildichtungen 217D ist skizziert. Das Ventil 217 kann pneumatisch oder elektrisch betätigt werden. Ein Kanal 213 mit einem Füllgas, beispielsweise CO₂ zum Spülen oder zur Aufnahme von Rückgas wie mit dem Pfeil 213PV angedeutet, ist in der rechten Hälfte der Figur 15A skizziert. Ein weiteres bewegliches Ventil 218 mit Ventildichtung 218D kann ähnlich bewegt werden wie das Ventil 217. Durch Betätigung des Ventils 218 kann der Kanal 213K verschlossen werden.

In Fig. 15B ist wiederum der Zustand skizziert, in dem Unterdruck mit Hilfe des Kanals 215 erzeugt wird. Die Unterdruck- oder Vakuumdichtung ist durch den Pfeil 215V angedeutet. Mit dem Bezugszeichen 211 L ist ein weiterer Dichtepunkt skizziert.

Die Fig. 15C skizziert erneut einen qualitativ zeitlichen Ablauf der in dem Behandlungselement, also der Fülldüse/Füllventil 251, auftretenden Druckverhältnisse, die wiederum in Korrespondenz zu den Fig. 15A und 15B steht. Dabei ähneln diese Druckverhältnisse ebenso denen, die in Fig. 14C skizziert sind. Die Bedeutungen der skizzierten Kurven sind ebenfalls denen ähnlich, die in Fig. 14C skizziert sind.

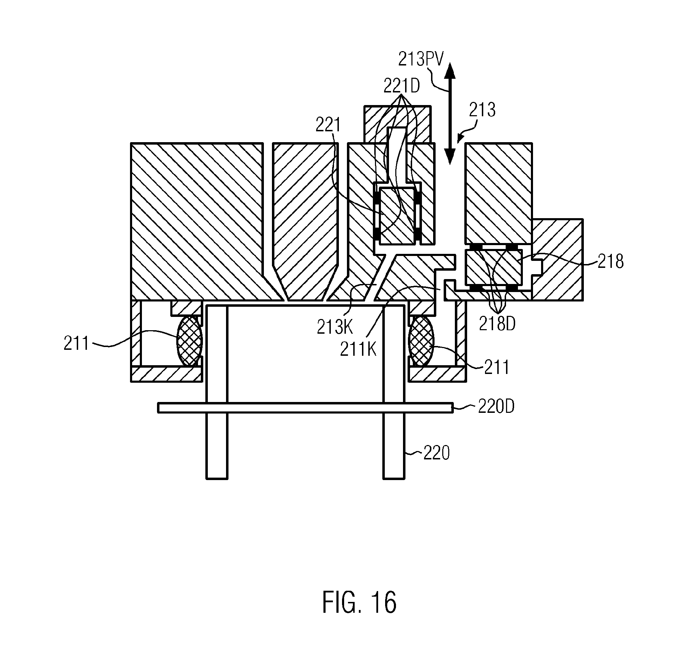

Die Fig. 16 skizziert eine weitere Weiterbildung für eine Füllstation mit einem Behandlungselement, hier einem Füllventil 252. Die Fig. 16 zeigt insbesondere einen sogenannten Freistrahlfüller für Flaschen, wobei der Druck für die Dichtung über den CO₂ Kanal aufgebracht wird. Im Gegensatz zu den Figuren 15A und 15B sowie 14A und 14B gibt es somit keinen eigenständigen Kanal 215, über den ein Dichtungsdruck aufgebracht wird. Der Kanal 213 zum Zuführen von CO₂ bringt dabei im Wesentlichen den Dichtungsdruck auf. Das Produkt wird erneut über den Kanal 219 zugeführt, wie durch den Pfeil 219P angedeutet.

In der Fig. 16 sind bewegliche Ventile 218 mit Ventildichtung 218D und 221 mit Ventildichtung 221 D angedeutet. Dabei können die Ventile 218 und 221 ähnlich wie die Ventile 218 und 217 in den vorangegangenen Figuren pneumatisch oder elektrisch betrieben werden. Das Ventil 218 kann den Kanal 211 K, der für das Zuführen und damit Steuern der im Wesentlichen radialen Dichtung 211 vorgesehen ist, verschließen oder öffnen. Das Ventil 221 kann den Kanal 213K, der zum Zuführen des Füllgases, CO₂ vorgesehen ist, öffnen oder verschließen. Das Bezugszeichen 220D bezieht sich auf einen Transportring des Behälters.

Es sei noch erwähnt, dass alle Ventile für die Dichtungen oder das Vakuum (11, 211, 217, 218) zum Anheften des Behälters selbstständig durch den Druck in der Zuführleitung verschlossen bzw. geöffnet werden können. In anderen Worten kann dann das Vorsteuerventil nur von einer Richtung auf den Ventilkolben einwirken.

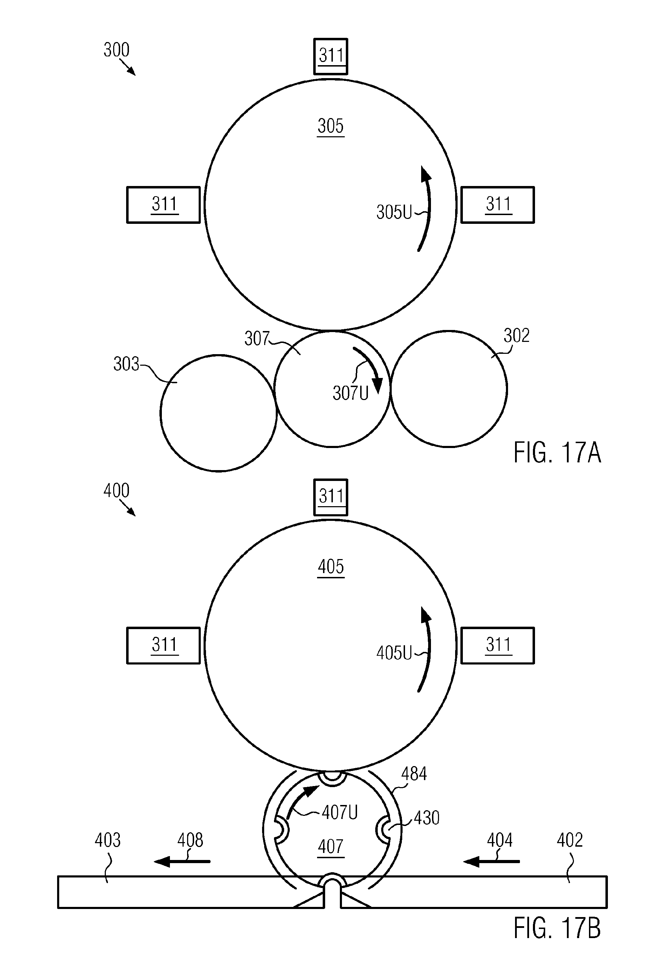

Die Fig. 17A zeigt eine weitere Weiterbildung einer Behandlungsvorrichtung entsprechend der vorliegenden Erfindung. Die Behandlungsvorrichtung 300 kann eine Etikettiermaschine umfassen, an der eine Mehrzahl von Behandlungsstationen bzw. -aufnahmen für Behälter, hier nicht skizziert, vorgesehen sind. Ein Zuführ- und Entnahmestern 307 ist ebenfalls angedeutet. Die jeweiligen Umlaufsinne der als Rundläufer ausgebildeten Elemente der Behandlungsvorrichtung 300 sind mit den Pfeilen 305U für das Behandlungsrad / Etikettierrad 305 und 307U für den Zuführ- und Entnahmestern 307 angedeutet. Vor- und nachgelagerte Sterne sind mit dem Bezugszeichen 302 und 303 angedeutet. Die Behälter werden von den hier nicht gezeigten Aufnahmen an Etikettierstationen bzw. -aggregaten 311 vorbeigeführt, mittels derer ein Etikett gespendet werden kann.

Die Fig. 17B skizziert eine weitere Weiterbildung einer Etikettiermaschine im Rahmen der vorliegenden Erfindung. Eine Behandlungsvorrichtung 400 zum Etikettieren besitzt ein Behandlungsrad 405. Zuführ- und Entnahmestern 407 mit seinen oberen Taschen 430 (und 431, welche von den Taschen 430 in dieser Ansicht verdeckt sind) und feststehenden Führungsschienen 484 ist ebenfalls skizziert. Ein Transportmedium, wie etwa ein Behälterzuführband, ist durch das Bezugszeichen 402 angedeutet. Ebenso ist ein Behälterabführtransportband mit dem Bezugszeichen 403 angedeutet. Die Zuführ- und Abführrichtung für die Behälter sind durch die Bezugszeichen 404 und 408 angedeutet. Das Behälterabführtransportband ist typischerweise in einer anderen Ebene als das Behälterzuführtransportband vorgesehen. Dies wird nachfolgend weiter erläutert.

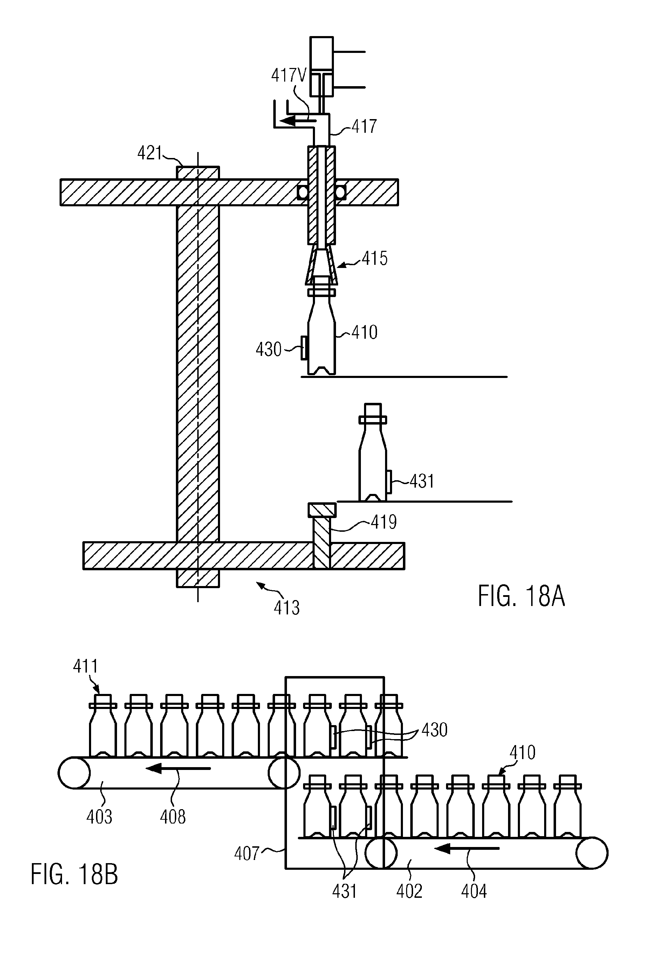

Die Fig. 18A zeigt eine Behandlungsstation mit einem Behandlungselement der Behandlungsvorrichtung wie in der Fig. 17A oder 17B angedeutet. Dabei ist in der Fig. 18A für eine Etikettiervorrichtung eine Zentriervorrichtung 415 als Behandlungselement angedeutet. Die Zentriervorrichtung 415 kann einen Behälter 410 zentrieren. Die Zentrierung des Behälters 410 erfolgt zwischen den beiden Karussellteilen 413 und 421. Die Zentriervorrichtung/die Zentrierglocke 415 kann über einen Kanal 417, beispielsweise mit einer Pumpe, etwa einer Vakuumpumpe, hier nicht gezeigt, verbunden sein. Dieses ist durch den Pfeil 417V angedeutet. Durch den Unterdruck kann erneut gewährleistet werden, dass der zu etikettierende Behälter 410 von der Zentrierglocke geführt werden kann. Ferner zeigt die Fig. 18A einen unteren Antrieb 419, der ein im Wesentlichen höhenverstellbares Bodenelement zur Halterung der Flasche 410 andeutet. Die Zentrierglocke kann alternativ eine Greifvorrichtung oder eine Dichtung oder eine Klammer aufweisen, hier nicht gezeigt.

Die Fig. 18B zeigt im Bereich des Zuführ- und Entnahmestern 407, dass die zu etikettierenden Behälter 410 und die bereits etikettierten Behälter 411 mit Hilfe von Transportbändern 402 und 403 in verschiedenen Ebenen zugeführt und abtransportiert werden. Die Bewegungsrichtungen der Transportbänder sind durch die Pfeile 404 und 408 skizziert. In der Fig. 18B sind Greiferelemente 430 und 431 an dem Zuführ- und Entnahmesterne 407 angedeutet. Ähnlich wie in Figur 2 und in den Figuren 5 - 9 werden das Zuführen und Entnehmen der zu behandelnden, hier zu etikettierenden Behälter, und der behandelten, hier etikettierten Behälter höhenversetzt dargestellt. Greiferelemente 430, in dieser schematischen Darstellung oben gezeigt, sind also in einer Ebene dargestellt, die höhenversetzt ist gegenüber der Ebene, in denen die Greiferelement 431, hier unten gezeigt, angeordnet sind. Bei dem Zuführ- und Entnahmestern 407 handelt es sich hier bevorzugt um einen Taschenstern, an welchem sowohl die unteren Greifer bzw. Taschen 431 als auch die oberen Greifer bzw. Taschen 430 angeordnet sind.

In einer nicht gezeigten Ausführungsform ist es insbesondere auf diese Weise möglich, eine Etikettierung mit einem dehnbaren, schlauchförmigen Etikett vorzunehmen. Hierbei wird das schlauchförmige Etikett auf mehrere, sich in Umfangsrichtung der Maschine mitdrehende Finger zugeführt, welche in der oberen Ebene innerhalb des Karussells angeordnet sind. Nach der Eingabe der Flasche in die untere Ebene der Etikettiermaschine wird das Etikett durch die Finger radial nach außen gedehnt. Die Flasche wird anschließend in die obere Ebene der Maschine mit einem Teller unterhalb der Flasche transportiert, so dass sie sich radial innerhalb des gespannten Etiketts befindet. Gehalten wird sie oben bevorzugt durch eine Klammer oder einen Dorn, so dass sich der Teller wieder absenken kann. In einem weiteren Schritt werden die Finger, welche sich zwischen Flasche und Etikett befinden abgezogen, was bei einem gleichzeitigen Festhalten des Etiketts mit einem zum Flaschenkörper feststehendem Element erfolgen kann. Das dehnbare Etikett spannt sich danach um den Flaschenkörper. Nach der somit erfolgten Etikettierung wird die behandelte Flasche, welche sich immer noch in der oberen Ebene der Maschine befindet, wieder durch den Zuführ- und Entnahmestern abtransportiert.

Es versteht sich, dass das Konzept der vorliegenden Erfindung zum Entnehmen und Bewegen eines zu behandelnden Behältnisses von einer Behandlungsvorrichtung sich auf eine Vielzahl von Behandlungseinheiten wie Ladestationen, Heizkammern, Füllstationen, Etikettierstationen, Sterilisations- oder Rinsstationen übertragen lässt. Durch die erfindungsgemäßen Behandlungsstationen wird eine Verringerung des Totraums und eine Behandlung der Behältnisse über typischerweise mindestens 330° des Umlaufs der Behandlungsvorrichtung möglich.

Es versteht sich, dass die in den zuvor beschriebenen Ausführungsbeispielen genannten Merkmale sich nicht auf die speziell in den Figuren gezeigten Kombinationen beschränken, sondern auch in beliebigen anderen Kombinationen möglich sein können.

## Patentansprüche

1. Behandlungsvorrichtung (100, 101, 102, 200, 300, 400) mit einem, insbesondere kontinuierlich angetriebenen, Behandlungsrad (100R, 101 R, 201 R, 205, 305, 405) mit mindestens einer Behandlungsstation (10, 30) zur Behandlung von Behältern (1, 21, 23, 43, 53, 71, 77, 410, 411);
mit nur einem Stern (17, 201, 307, 407) zum Zuführen und Entnehmen von Behältern in beziehungsweise aus der Behandlungsvorrichtung, der wenigstens zwei Greiferelemente (20, 22, 24, 40, 42, 44, 75L, 75R, 430, 431) zum Zuführen von zu behandelnden Behältern (1, 21, 23, 43, 53, 71, 77, 410, 411) an die Behandlungsstation und zum Entnehmen der behandelten Behälter (1, 21, 23, 43, 53, 71, 77, 410, 411) von der Behandlungsstation (10, 30) aufweist;
wobei die Behandlungsstation (10,30) eine Behandlungsposition innerhalb der Behandlungsstation aufweist;
**dadurch gekennzeichnet, dass** die Behandlungsstation (10, 30) mindestens ein Behälter behandelndes Behandlungselement (14, 250, 251, 252, 415) aufweist, das so ausgebildet ist, dass es wenigstens teilweise die zugeführten, zu behandelnden Behälter (1, 21, 23, 43, 53, 71, 77, 410, 411) und/oder die zu entnehmenden, behandelten Behältern (1, 21, 23, 43, 53, 71, 77, 410, 411) aus der Behandlungsposition heraus und/oder in die Behandlungsposition hinein, insbesondere vertikal oder horizontal, bewegen kann.

2. Behandlungsvorrichtung (100, 101, 102, 200, 300, 400) nach Anspruch 1,
wobei das Behandlungselement (14, 250, 251, 252, 415) einen Antrieb umfasst, wobei für die Bewegung der Behälter der Antrieb des Behandlungselements (14, 250, 251, 252, 415) genutzt wird;
wobei das Behandlungselement (14, 250, 251, 252, 415) mit einer Pneumatik eine pneumatische Behandlung der Behälter durchführt; und wobei durch die Pneumatik ein Anheften der Behälter an das Behandlungselement (14, 250, 251, 252, 415) gesteuert wird.

3. Behandlungsvorrichtung (100, 101, 102, 200, 300, 400) nach wenigstens einem der Ansprüche 1 - 2, wobei die wenigstens zwei Greiferelemente (20, 22, 24, 40, 42, 44, 75L, 75R, 430, 431) des Sterns (17, 201, 307, 407) im Wesentlichen in einer Ebene angeordnet sind, die im Wesentlichen parallel zur Ebene der Behandlungsvorrichtung (100, 101, 102, 200, 300, 400) ist, wobei ein erstes Greiferelement der wenigstens zwei Greiferelemente nur aus der Behandlungsstation zu entnehmenden Behältern zugeordnet ist und ein zweites der wenigstens zwei Greiferelement nur in die Behandlungsstation einzuführenden Behältern zugeordnet ist.

4. Behandlungsvorrichtung (100, 101, 102, 200, 300, 400) nach wenigstens einem der Ansprüche 1 - 2, wobei die wenigstens zwei Greiferelemente (20, 22, 24, 40, 42, 44, 75L, 75R, 430, 431) des Sterns (17, 201, 307, 407) in zwei höhenversetzten Ebenen angeordnet sind, die jede im Wesentlichen parallel zur Ebene der Behandlungsvorrichtung (100, 101, 102, 200, 300, 400) ist, so dass die zu behandelnden Behälter (1, 21, 23, 43, 53, 71, 77, 410, 411) im Wesentlichen in einer der beiden höhenversetzten Ebenen einführbar sind und die behandelten Behälter (1, 21, 23, 43, 53, 71, 77, 410, 411) im Wesentlichen in der anderen der beiden höhenversetzten Ebenen ausführbar sind.

5. Behandlungsvorrichtung (100, 101, 102, 200, 300, 400) nach wenigstens einem der Ansprüche 1 - 4, wobei die Greiferelemente (20, 22, 24, 40, 42, 44, 75L, 75R) eine Schwenkbewegung und/oder eine teleskopartige Linearbewegung in einer Ebene ausführen können, die im Wesentlichen parallel zur Ebene der Behandlungsvorrichtung (100, 101, 102, 200, 300, 400) ist;
wobei die Greiferelemente (20, 22, 24, 40, 42, 44, 75L, 75R) höhenverstellbar sind;
wobei insbesondere die Bewegung der Greiferelemente (20, 22, 24, 40, 42, 44, 75L, 75R) mit einem oder mehreren Servomotoren oder magnetisch wirkenden Linearmotoren gesteuert wird.

6. Behandlungsvorrichtung (100, 101, 102) nach wenigstens einem der Ansprüche 1 - 5, wobei das Behandlungselement (14) eine Vorrichtung zur Blasformung von Behältern umfasst, sowie eine Blasform (2, 2A, 2B, 2C, 2D, 2E, 70A, 70B), wobei beispielsweise die zugeführten Behälter Vorformlinge sind.

7. Behandlungsvorrichtung (100, 101, 102) nach Anspruch 6,
wobei das Behandlungselement (14) eine Blasdüse (12) umfasst, wobei an der Blasdüse bewegliche Ventile (4, 5, 6) zum Festhalten der Behälter vorgesehen sind;
wobei die Blasdüse (12) eine Dichtung (3, 11) umfasst, die den Behälter zumindest an seinem oberen Ende (51A, 52A) radial umschließt, wobei die Blasdüse (12) ausgebildet ist, die Behälter durch Druckvariation an das Behandlungselement (14) anzuheften, die angehefteten Behälter zu bewegen und/oder abzusetzen, oder wobei das Behandlungselement (14) eine Reckstange (11) umfasst, wobei die Reckstange (11) ausgebildet ist, die Behälter an die Reckstange (11) durch Druckvariation anzuheften, die angehefteten Behälter zu bewegen und/oder abzusetzen.

8. Behandlungsvorrichtung (100, 101, 102) nach wenigstens einem der Ansprüche 6 - 7, wobei das Behandlungselement (14) eine wenigstens dreiteilige Blasform (2C, 2D, 2E) mit einem Bodenteil (2E) umfasst, der einen Hinterschnitt (52H) bildet, der relativ zum Behandlungselement stationär ausgebildet ist.

9. Behandlungsvorrichtung (200) nach wenigstens einem der Ansprüche 1 - 5,
wobei die Behandlungsstation eine Füllstation zum Befüllen von Behältern umfasst;
wobei das Behandlungselement (250, 251, 252) ein Füllventil umfasst, das eine Dichtung (211) umfasst, die den Behälter (210) zumindest an seinem oberen Ende radial umschließt, wobei der Behälter (210) mittels Druckvariation im Füllventil an das Füllventil angeheftet werden kann, wobei der angeheftete Behälter (210) mittels des Füllventils bewegt und/oder abgesetzt werden kann;
wobei das Behandlungselement (250, 251, 252) zusätzlich eine Vakuumpumpe umfasst, wobei der Behälter (210) zusätzlich mittels Druckvariation der Vakuumpumpe angeheftet, bewegt und/oder abgesetzt wird.

10. Behandlungsvorrichtung (100, 101, 102) nach Anspruch 9, wobei das Behandlungselement (250, 251, 252) zusätzlich eine Klammervorrichtung zum Fassen der Behälter umfasst.

11. Behandlungsvorrichtung (300, 400) nach wenigstens einem der Ansprüche 1 - 5, wobei die Behandlungsstation eine Etikettierstation umfasst, wobei das Behandlungselement (415) eine Zentrierglocke umfasst, die an eine Vakuumpumpe angeschlossen ist und/oder eine Klammervorrichtung zum Fassen der Behälter (410, 411) umfasst, so dass die Behälter angeheftet, bewegt und/oder abgesetzt werden können.

12. Verfahren zum Behandeln von Behältern mit einer Behandlungsvorrichtung (100, 101, 102, 200, 300, 400) mit einem, insbesondere kontinuierlich angetriebenen, Behandlungsrad (100R, 101 R, 201 R, 205, 305, 405) mit mindestens einer Behandlungsstation (10, 30) zur Behandlung von Behältern (1, 21, 23, 43, 53, 71, 77, 410, 411); mit nur einem Stern (17, 201, 307, 407) zum Zuführen und Entnehmen von Behältern in beziehungsweise aus der Behandlungsvorrichtung, wobei der Stern wenigstens zwei Greiferelemente (20, 22, 24, 40, 42, 44, 75L, 75R, 430, 431) zum Zuführen von zu behandelnden Behältern (1, 21, 23, 43, 53, 71, 77, 410, 411) an die Behandlungsstation und zum Entnehmen der behandelten Behälter (1, 21, 23, 43, 53, 71, 77, 410, 411) von der Behandlungsstation (10, 30) aufweist; wobei die Behandlungsstation (10,30) eine Behandlungsposition innerhalb der Behandlungsstation aufweist;
**dadurch gekennzeichnet, dass** das Verfahren die folgenden weiteren Schritte umfasst:
Behandeln eines Behälters in einem Behandlungselement (14, 250, 251, 252, 217) der Behandlungsstation;
Entnehmen des behandelten Behälters aus und Zuführen eines zu behandelnden Behälters in das Behandlungselement (17, 250, 251, 252) von dem Stern;
Bewegen des zugeführten Behälters in die Behandlungsposition und/oder des zu entnehmenden Behälters aus der Behandlungsposition mit dem Behandlungselement(14, 250, 251, 252, 415 ), insbesondere in einer horizontalen oder vertikalen Richtung.

13. Verfahren nach Anspruch 12, wobei das Behandlungselement (14) eine Vorrichtung zur Blasformung von Behältern umfasst, sowie eine Blasform (2, 2A, 2B, 2C, 2D, 2E, 70A, 70B),mit den Schritten:
(i) Greifen des zu behandelnden Behälters, beispielsweise eines Vorformlings, mit einem Greiferelement (20, 22, 24, 40, 42, 44, 75L, 75R);
(ii) Blasen eines Behälters zu einem behandelten Behälter, beispielsweise zu einer Flasche, aus einem bereits eingeführten, zu behandelnden Behälter;
(iii) Öffnen der Blasform und Anheben des geblasenen Behälters aus der geöffneten Blasform (2, 2A, 2B, 2C, 2D, 2E, 70A, 70B) mittels des Behandlungselements (10, 30);
(iv) Greifen des geblasenen Behälters mit einem anderen, zweiten Greiferelement und Eingeben des zu behandelnden Behälters, beispielsweise dem Vorformling, mit einem anderen, ersten Greiferelement in die geöffnete Blasform (10, 30);
(v) Schließen der Blasform (10, 30) um den eingegebenen, zu behandelnden Behälter, und Loslassen des geblasenen Behälters aus dem Behandlungselement (10, 30);
(vi) Abnehmen des eingegebenen, zu behandelnden Behälters aus dem ersten Greiferelement (20, 22, 24, 40, 42, 44, 75L, 75R) und Entnehmen des geblasenen Behälters mit dem zweiten Greiferelement (20, 22, 24, 40, 42, 44, 75L, 75R).

14. Verfahren nach Anspruch 12 wobei die Behandlungsstation eine Füllstation zum Befüllen von Behältern umfasst, mit den Schritten:
(i) Greifen eines zu behandelnden Behälters, beispielsweise einer Flasche, mit einem ersten Greiferelement (20, 22, 24, 40, 42, 44, 75L, 75R);
(ii) Füllen eines bereits eingeführten, zu behandelnden Behälters, beispielsweise einer Flasche, mit einer Flüssigkeit, beispielsweise einem Getränk;
(iii) Anheben des gefüllten Behälters mittels des Behandlungselements (250, 251, 252);
(iv) Greifen des gefüllten Behälters mit einem anderen, zweiten Greiferelement und Eingeben des zu behandelnden Behälters;
(v) Loslassen des gefüllten Behälters aus dem Behandlungselement;
(vi) Abnehmen des zu behandelnden eingegebenen Behälters aus dem ersten Greiferelement (20, 22, 24, 40, 42, 44, 75L, 75R) und Entnehmen des gefüllten Behälters mit dem zweiten Greiferelement (20, 22, 24, 40, 42, 44, 75L, 75R).

15. Verfahren nach Anspruch 12 wobei die Behandlungsstation eine Etikettierstation umfasst, wobei das Behandlungselement (415) eine Zentrierglocke (415) umfasst, die an eine Vakuumpumpe angeschlossen ist und/oder eine Klammervorrichtung zum Fassen der Behälter (410, 411) umfasst, mit den Schritten:
(i) Greifen eines zu behandelnden Behälters, beispielsweise einer Flasche, mit einem ersten Greiferelement (20, 22, 24, 40, 42, 44, 75L, 75R);
(ii) Etikettieren eines bereits eingeführten, zu behandelnden Behälters, beispielsweise einer Flasche;
(iii) Anheben des etikettierten Behälters mittels des Behandlungselements (415);
(iv) Greifen des etikettierten Behälters mit einem anderen, zweiten Greiferelement und Eingeben des zu behandelnden Behälters;
(v) Loslassen des etikettierten Behälters aus dem Behandlungselement (415);
(vi) Abnehmen des zu behandelnden, eingegebenen Behälters aus dem ersten Greiferelement (20, 22, 24, 40, 42, 44, 75L, 75R) und Entnehmen des etikettierten Behälters mit dem zweiten Greiferelement (20, 22, 24, 40, 42, 44, 75L, 75R).

## Claims

1. Processing device (100, 101, 102, 200, 300, 400) having a processing wheel (100R, 101R, 201 R, 205, 305, 405) which is in particular continuously driven, comprising at least one processing station (10, 30) for processing containers (1, 21, 23, 43, 53, 71, 77, 410, 411);
comprising only one star (17, 201, 307, 407) for feeding and removing containers into and out of said processing device, which has at least two gripper elements (20, 22, 24, 40, 42, 44, 75L, 75R, 430, 431) for feeding containers to be processed (1, 21, 23, 43, 53, 71, 77, 410, 411) to said processing station and for removing said processed containers (1, 21, 23, 43, 53, 71, 77, 410, 411) from said processing station (10, 30); wherein said processing station (10, 30) comprises a processing position within said processing station,
**characterized in that**
said processing station (10, 30) has at least one processing element (14, 250, 251, 252, 415) processing containers, which is designed such that it can move said fed containers (1, 21, 23, 43, 53, 71, 77, 410, 411) to be processed and/or said processed containers (1, 21, 23, 43, 53, 71, 77, 410, 411) to be removed at least partially out of said processing position and/or into said processing position, in particular in a vertical or horizontal manner.

2. Processing device (100, 101, 102, 200, 300, 400) according to claim 1, wherein said processing element (14, 250, 251, 252, 415) comprises a drive, wherein said drive of said processing element (14, 250, 251, 252, 415) is used for movement of said containers;
wherein said processing element (14, 250, 251, 252, 415) performs a pneumatic process for said containers using a pneumatic device; and wherein said pneumatic device controls affixing said containers to said processing element (14, 250, 251, 252, 415).

3. Processing device (100, 101, 102, 200, 300, 400) according to at least one of the claims 1 - 2, wherein said at least two gripper elements (20, 22, 24, 40, 42, 44, 75L, 75R, 430, 431) of said star (17, 201, 307, 407) are arranged substantially in one plane which is substantially parallel to the plane of said processing device (100, 101, 102, 200, 300, 400), wherein a first gripper element of said at least two gripper elements is associated only with containers to be removed from said processing station and a second of said at least two gripper elements is associated only with containers to be introduced into said processing station.

4. Processing device (100, 101, 102, 200, 300, 400) according to at least one of the claims 1 - 2, wherein said at least two gripper elements (20, 22, 24, 40, 42, 44, 75L, 75R, 430, 431) of said star (17, 201, 307, 407) are arranged in two vertically offset planes which are each substantially parallel to the plane of said processing device (100, 101, 102, 200, 300, 400), so that said containers (1, 21, 23, 43, 53, 71, 77, 410, 411) to be processed can be introduced in one of said two vertically offset planes and said processed containers (1, 21, 23, 43, 53, 71, 77, 410, 411) can be removed substantially in the other of said two vertically offset planes.

5. Processing device (100, 101, 102, 200, 300, 400) according to at least one of the claims 1 - 4, wherein said gripper elements (20, 22, 24, 40, 42, 44, 75L, 75R) can perform a pivoting motion and/or a telescopically linear motion in a plane that is substantially parallel to said plane of said processing device (100, 101, 102, 200, 300, 400;
wherein said gripper elements (20, 22, 24, 40, 42, 44, 75L, 75R) are adjustable in height;
wherein in particular the motion of said gripper elements (20, 22, 24, 40, 42, 44, 75L, 75R) is controlled by one or more servo motors or magnetically acting linear motors.

6. Processing device (100, 101, 102) according to at least one of the claims 1 - 5, wherein said processing element (14) comprises a device for blow-molding containers and a blow mold (2, 2A, 2B, 2C, 2D, 2E, 70A, 70B), where, for example, said containers fed are preforms.

7. Processing device (100, 101, 102) according to claim 6,
wherein said processing element (14) comprises a blowing nozzle (12) wherein movable valves (4, 5, 6) are provided at said blowing nozzle for holding said containers;
wherein the blowing nozzle (12) comprises a seal (3, 11) radially enclosing said container at least at its upper end (51A, 52A), wherein said blowing nozzle (12) is designed to affix said containers by pressure variation to said processing element (14), to move said affixed containers and/or to set them down; or wherein said processing element (12) comprises a blowing nozzle and a stretching rod (11), wherein said stretching rod (11) is formed to affix said containers to said stretching rod (11) using pressure variation, to move said affixed containers and/or to set them down.

8. Processing device (100, 101, 102) according to at least one of the claims 6 - 7, wherein said the processing element (14) comprises an at least three-part blow mold (20, 2D, 2E) with a base member (2E) forming an undercut (52H) that is designed as being stationary relative to said processing element.

9. Processing device (200) according to at least one of the claims 1 - 5,
wherein said processing station comprises a filling station for filling containers;
wherein said processing element (250, 251, 252) comprises a filling valve that comprises a seal radially enclosing said container (210) at least at its upper end, wherein said container (210) can be affixed to said filling valve by pressure variation in said filling valve, wherein said affixed container (210) can be moved and/or set down using said filling valve;
wherein said processing element (250, 251, 252) additionally comprises a vacuum pump, wherein said container (210) is additionally affixed, moved and/or set down using pressure variation of said vacuum pump.

10. Processing device (100, 101, 102) according to claim 9, wherein said processing element (250, 251, 252) additionally comprises a clamping device for gripping said containers.

11. Processing device (300, 400) according to at least one of the claims 1 - 5, wherein said processing station comprises a labeling station, wherein said processing element (415) comprises a centering bell that is connected to a vacuum pump and/or a clamping device for gripping said containers (410, 411) such that said containers can be affixed, moved and/or set down.

12. Method for processing containers with a processing device (100, 101, 102, 200, 300, 400) having a processing wheel (100R, 101R, 201 R, 205, 305, 405) which is in particular continuously driven, comprising at least one processing station (10, 30) for processing containers (1, 21, 23, 43, 53, 71, 77, 410, 411); comprising only one star (17, 201, 307, 407) for feeding and removing containers into and out of said processing device, wherein said star has at least two gripper elements (20, 22, 24, 40, 42, 44, 75L, 75R, 430, 431) for feeding containers (1, 21, 23, 43, 53, 71, 77, 410, 411) to be processed to said processing station and for removing said processed containers (1, 21, 23, 43, 53, 71, 77, 410, 411) from said processing station (10, 30); wherein said processing station (10,30) comprises a processing position within said processing station; **characterized in that** the method comprises the following further steps:
processing a container in a processing element (14, 250, 251, 252, 217) of said processing station;
removing said processed container from and feeding a container to be processed into said processing element (17, 250, 251, 252) of said star;
moving said fed container into said processing position and/or said container to be removed out of said processing position with said processing element (14, 250, 251, 252, 415 ), in particular in a horizontal or vertical direction.

13. Method according to claim 12, wherein said processing element (14) comprises a device for blow-molding containers as well as a blow mold (2, 2A, 2B, 2C, 2D, 2E, 70A, 70B), comprising the steps of:
(i) gripping said container to be processed, for example, a preform, with a gripper element (20, 22, 24, 40, 42, 44, 75L, 75R);
(ii) blowing a container from an already introduced container to be processed to form a processed container, for example to a bottle;
(iii) opening said blow mold and raising said blow-molded container from said opened blow mold (2, 2A, 2B, 2C, 2D, 2E, 70A, 70B) using said processing element (10, 30);
(iv) gripping said blow-molded container with a further, second gripper element and introducing said container to be processed, for example, said preform, with a further, first gripper element into said opened blow mold (10, 30);
(v) closing said blow mold (10, 30) around said introduced container to be processed and releasing said blow-molded container from said processing element (10, 30);
(vi) removing said introduced container to be processed from said first gripper element (20, 22, 24, 40, 42, 44, 75L, 75R) and removing said blow-molded container with said second gripper element (20, 22, 24, 40, 42, 44, 75L, 75R).

14. Method according to claim 12, wherein said processing station comprises a filling station for filling containers, comprising the steps of:
(i) gripping said container to be processed, for example, a preform, with a first gripper element (20, 22, 24, 40, 42, 44, 75L, 75R);
(ii) filling an already introduced container to be processed, for example a bottle, with a liquid, for example, a beverage;
(iii) raising said filled container using said processing element (250, 251, 252);
(iv) gripping said filled container with a further, second gripper element and introducing said container to be processed;
(v) releasing said filled container from said processing element;
(vi) removing said introduced container to be processed from said first gripper element (20, 22, 24, 40, 42, 44, 75L, 75R) and removing said filled container with said second gripper element (20, 22, 24, 40, 42, 44, 75L, 75R).

15. Method according to claim 12, wherein said processing station comprises a labeling station, wherein said processing element (415) comprises a centering bell (415) which is connected to a vacuum pump and/or a clamping device for gripping said containers (410, 411), comprising the steps of:
(i) gripping a container to be processed, for example, a preform, with a first gripper element (20, 22, 24, 40, 42, 44, 75L, 75R);
(ii) labeling an already introduced container to be processed, for example, a bottle;
(iii) raising said labeled container using said processing element (415);
(iv) gripping said labeled container with a further, second gripper element and introducing said container to be processed;
(v) releasing said labeled container from said processing element (415);
(vi) removing said introduced container to be processed from said first gripper element (20, 22, 24, 40, 42, 44, 75L, 75R) and removing said labeled container with said second gripper element (20, 22, 24, 40, 42, 44, 75L, 75R).

## Revendications

1. Dispositif de traitement (100, 101, 102, 200, 300, 400) comprenant une roue de traitement (100R, 101R, 201R, 205, 305, 405), notamment entraînée de manière continue, et comportant au moins un poste de traitement (10, 30) pour le traitement de récipients ou contenants (1, 21, 23, 43, 53, 71, 77, 410, 411) ;
l'ensemble ne comprenant qu'une seule roue en étoile ou étoile (17, 201, 307, 407) pour amener et enlever des contenants dans et respectivement du dispositif de traitement, et qui comporte au moins deux éléments préhenseurs (20, 22, 24, 40, 42, 44, 75L, 75R, 430, 431) pour amener des contenants (1, 21, 23, 43, 53, 71, 77, 410, 411) à traiter au poste de traitement, et pour enlever les contenants (1, 21, 23, 43, 53, 71, 77, 410, 411) traités du poste de traitement (10, 30) ;
le poste de traitement (10, 30) présentant une position de traitement à l'intérieur du poste de traitement ; **caractérisé en ce que** le poste de traitement (10, 30) comporte au moins un élément de traitement (14, 250, 251, 252, 415) traitant les contenants, qui est conçu de manière à pouvoir déplacer au moins en partie, notamment verticalement ou horizontalement, hors de la position de traitement et/ou dans la position de traitement, les contenants (1, 21, 23, 43, 53, 71, 77, 410, 411) à traiter ayant été amenés et/ou les contenants (1, 21, 23, 43, 53, 71, 77, 410, 411) traités à enlever.

2. Dispositif de traitement (100, 101, 102, 200, 300, 400) selon la revendication 1,
dans lequel l'élément de traitement (14, 250, 251, 252, 415) comprend un entraînement,
dans lequel on utilise l'entraînement de l'élément de traitement (14, 250, 251, 252, 415) pour le mouvement des contenants ;
dans lequel l'élément de traitement (14, 250, 251, 252, 415) effectue un traitement pneumatique des contenants au moyen d'un système pneumatique ;
et dans lequel le système pneumatique commande une adhésion des contenants à l'élément de traitement (14, 250, 251, 252, 415).

3. Dispositif de traitement (100, 101, 102, 200, 300, 400) selon l'une au moins des revendications 1 - 2, dans lequel lesdits au moins deux éléments préhenseurs (20, 22, 24, 40, 42, 44, 75L, 75R, 430, 431) de l'étoile (17, 201, 307, 407) sont agencés dans un plan, qui est sensiblement parallèle au plan du dispositif de traitement (100, 101, 102, 200, 300, 400),
et dans lequel un premier élément préhenseur desdits au moins deux éléments préhenseurs est associé uniquement à des contenants devant être enlevés du poste de traitement, et un deuxième desdits au moins deux éléments préhenseurs est associé uniquement à des contenants devant être introduits dans le poste de traitement.

4. Dispositif de traitement (100, 101, 102, 200, 300, 400) selon l'une au moins des revendications 1 - 2, dans lequel lesdits au moins deux éléments préhenseurs (20, 22, 24, 40, 42, 44, 75L, 75R, 430, 431) de l'étoile (17, 201, 307, 407) sont agencés dans deux plans décalés en hauteur, qui sont chacun sensiblement parallèles au plan du dispositif de traitement (100, 101, 102, 200, 300, 400), de sorte que les contenants (1, 21, 23, 43, 53, 71, 77, 410, 411) à traiter peuvent être introduits sensiblement dans l'un des deux plans décalés en hauteur, et les contenants (1, 21, 23, 43, 53, 71, 77, 410, 411) traités peuvent être évacués dans l'autre des deux plans décalés en hauteur.

5. Dispositif de traitement (100, 101, 102, 200, 300, 400) selon l'une au moins des revendications 1 - 4, dans lequel les éléments préhenseurs (20, 22, 24, 40, 42, 44, 75L, 75R) peuvent effectuer un mouvement de pivotement et/ou un mouvement linéaire télescopique dans un plan, qui est sensiblement parallèle au plan du dispositif de traitement (100, 101, 102, 200, 300, 400) ;
dans lequel les éléments préhenseurs (20, 22, 24, 40, 42, 44, 75L, 75R) sont réglables en hauteur ;
et dans lequel notamment le mouvement des éléments préhenseurs (20, 22, 24, 40, 42, 44, 75L, 75R) est commandé à l'aide d'au moins un ou plusieurs servomoteurs ou moteurs linéaires à action magnétique.

6. Dispositif de traitement (100, 101, 102) selon l'une au moins des revendications 1 - 5,
dans lequel l'élément de traitement (14) comprend un dispositif pour le moulage par soufflage de contenants, ainsi qu'un moule de soufflage (2, 2A, 2B, 2C, 2D, 2E, 70A, 70B),
et dans lequel les contenants amenés sont par exemple des ébauches de moulage ou préformes.

7. Dispositif de traitement (100, 101, 102) selon la revendication 6,
dans lequel l'élément de traitement (14) comprend une buse de soufflage (12),
dans lequel sur la buse de soufflage sont prévues des valves ou soupapes mobiles (4, 5, 6) pour le maintien des contenants ;
dans lequel la buse de soufflage (12) comporte un joint d'étanchéité (3, 11), qui entoure radialement le contenant, au moins à son extrémité supérieure (51A, 52A),
dans lequel la buse de soufflage (12) est conçue pour faire adhérer les contenants à l'élément de traitement (14), par variation de pression, pour déplacer et/ou déposer les contenants qui adhèrent,
ou dans lequel l'élément de traitement (14) comprend une tige d'étirage (11),
et dans lequel la tige d'étirage (11) est conçue pour faire adhérer les contenants à la tige d'étirage (11) par variation de pression, pour déplacer et/ou déposer les contenants qui adhèrent.

8. Dispositif de traitement (100, 101, 102) selon l'une au moins des revendications 6 - 7,
dans lequel l'élément de traitement (14) comprend un moule de soufflage (2C, 2D, 2E) au moins en trois parties avec une partie de fond (2E), qui forme une contre-dépouille (52H) et est stationnaire par rapport à l'élément de traitement.

9. Dispositif de traitement (200) selon l'une au moins des revendications 1 - 5,
dans lequel le poste de traitement comprend un poste de remplissage pour remplir des contenants ;
dans lequel l'élément de traitement (250, 251, 252) comporte une vanne de remplissage comportant un joint d'étanchéité (211), qui entoure radialement le contenant (210), au moins à son extrémité supérieure,
dans lequel le contenant (210) peut adhérer contre la vanne de remplissage par variation de pression dans la vanne de remplissage,
dans lequel le contenant (210), qui adhère, peut être déplacé et/ou déposé au moyen de la vanne de remplissage ;
dans lequel l'élément de traitement (250, 251, 252) comprend en outre une pompe à vide,
et dans lequel le contenant (210) peut, en outre, adhérer moyennant variation de la pression de la pompe à vide, être déplacé et/ou déposé.

10. Dispositif de traitement (100, 101, 102) selon la revendication 9,
dans lequel l'élément de traitement (250, 251, 252) comprend, en outre, un dispositif à griffes de serrage pour saisir les contenants.

11. Dispositif de traitement (300, 400) selon l'une au moins des revendications 1 - 5,
dans lequel le poste de traitement comprend un poste d'étiquetage,
dans lequel l'élément de traitement (415) comprend une cloche de centrage, qui est raccordée à une pompe à vide, et/ou comprend un dispositif à griffes de serrage pour saisir les contenants (410, 411), de sorte que les contenants puissent adhérer, être déplacés et/ou déposés.

12. Procédé pour traiter des récipients ou contenants à l'aide d'un dispositif de traitement (100, 101, 102, 200, 300, 400) comprenant une roue de traitement (100R, 101R, 201R, 205, 305, 405), notamment entraînée de manière continue, et comportant au moins un poste de traitement (10, 30) pour le traitement de récipients ou contenants (1, 21, 23, 43, 53, 71, 77, 410, 411) ; l'ensemble ne comprenant qu'une seule roue en étoile ou étoile (17, 201, 307, 407) pour amener et enlever des contenants dans et respectivement du dispositif de traitement, l'étoile comportant au moins deux éléments préhenseurs (20, 22, 24, 40, 42, 44, 75L, 75R, 430, 431) pour amener des contenants (1, 21, 23, 43, 53, 71, 77, 410, 411) à traiter au poste de traitement, et pour enlever les contenants (1, 21, 23, 43, 53, 71, 77, 410, 411) traités du poste de traitement (10, 30) ; le poste de traitement (10, 30) présentant une position de traitement à l'intérieur du poste de traitement ;
**caractérisé en ce que** le procédé comprend les étapes supplémentaires suivantes :
traitement d'un contenant dans un élément de traitement (14, 250, 251, 252, 217) du poste de traitement ;
enlèvement du contenant traité de et amenée d'un contenant à traiter dans l'élément de traitement (17, 250, 251, 252) par l'étoile ;
déplacement du contenant amené dans la position de traitement et/ou du contenant à enlever hors de la position de traitement à l'aide de l'élément de traitement (14, 250, 251, 252, 415), notamment dans une direction horizontale ou verticale.

13. Procédé selon la revendication 12, l'élément de traitement (14) comprenant un dispositif de moulage par soufflage de contenants, ainsi qu'un moule de soufflage (2, 2A, 2B, 2C, 2D, 2E, 70A, 70B), le procédé présentant les étapes suivantes :
(i) saisie du contenant à traiter, par exemple d'une préforme, à l'aide d'un élément préhenseur (20, 22, 24, 40, 42, 44, 75L, 75R) ;
(ii) soufflage d'un contenant pour obtenir un contenant traité, par exemple une bouteille, à partir d'un contenant à traiter ayant déjà été introduit ;
(iii) ouverture du moule de soufflage et soulèvement du contenant soufflé hors du moule de soufflage ouvert (2, 2A, 2B, 2C, 2D, 2E, 70A, 70B) au moyen de l'élément de traitement (10, 30) ;
(iv) saisie du contenant soufflé avec un autre, deuxième élément préhenseur et introduction du contenant à traiter, par exemple la préforme, à l'aide d'un autre, premier élément préhenseur, dans le moule de soufflage ouvert (10, 30) ;
(v) fermeture du moule de soufflage (10, 30) autour du contenant à traiter ayant été introduit, et relâchement du contenant soufflé hors de l'élément de traitement (10, 30) ;
(vi) retrait du contenant à traiter ayant été introduit, hors du premier élément préhenseur (20, 22, 24, 40, 42, 44, 75L, 75R), et enlèvement du contenant soufflé à l'aide du deuxième élément préhenseur (20, 22, 24, 40, 42, 44, 75L, 75R).

14. Procédé selon la revendication 12, le poste de traitement comprenant un poste de remplissage pour remplir des contenants, le procédé présentant les étapes suivantes :
(i) saisie d'un contenant à traiter, par exemple une bouteille, à l'aide d'un premier élément préhenseur (20, 22, 24, 40, 42, 44, 75L, 75R) ;
(ii) remplissage d'un contenant à traiter ayant déjà été introduit, par exemple une bouteille, avec un liquide, par exemple une boisson ;
(iii) soulèvement du contenant rempli au moyen de l'élément de traitement (250, 251, 252) ;
(iv) saisie du contenant rempli avec un autre, deuxième élément préhenseur, et introduction du contenant à traiter ;
(v) relâchement du contenant rempli hors de l'élément de traitement ;
(vi) retrait du contenant à traiter ayant été introduit, hors du premier élément préhenseur (20, 22, 24, 40, 42, 44, 75L, 75R), et enlèvement du contenant rempli à l'aide du deuxième élément préhenseur (20, 22, 24, 40, 42, 44, 75L, 75R).

15. Procédé selon la revendication 12, le poste de traitement comprenant un poste d'étiquetage, l'élément de traitement (415) comprenant une cloche de centrage (415), qui est raccordée à une pompe à vide, et/ou un dispositif à griffes de serrage pour saisir les contenants (410, 411), le procédé présentant les étapes suivantes :
(i) saisie d'un contenant à traiter, par exemple une bouteille, à l'aide d'un premier élément préhenseur (20, 22, 24, 40, 42, 44, 75L, 75R) ;
(ii) étiquetage d'un contenant à traiter ayant déjà été introduit, par exemple une bouteille ;
(iii) soulèvement du contenant étiqueté au moyen de l'élément de traitement (415) ;
(iv) saisie du contenant étiqueté avec un autre, deuxième élément préhenseur et introduction du contenant à traiter ;
(v) relâchement du contenant étiqueté hors de l'élément de traitement (415) ;
(vi) retrait du contenant à traiter ayant été introduit, hors du premier élément préhenseur (20, 22, 24, 40, 42, 44, 75L, 75R), et enlèvement du contenant étiqueté à l'aide du deuxième élément préhenseur (20, 22, 24, 40, 42, 44, 75L, 75R).
